# EUROPEAN PATENT SPECIFICATION

(11) **EP 0 809 323 B1**
(45) Date of publication and mention of the grant of the patent: **02.04.2003**
(21) Application number: 97108432.2
(22) Date of filing: 26.05.1997
(51) Int. Cl.: H01Q 3/26

(54) **Signal processing apparatus and method for reducing the effects of interference and noise in wireless communications utilizing antenna array**
Signalverarbeitungsvorrichtung und -verfahren zur Reduzierung von Interferenzen und Rauschen bei Funkkommunikation mit Gruppenantenne
Appareil et méthode de traitement de signal pour réduire l'interférence et le bruit de communications sans fil avec réseau d'antennes

(30) Priority: 25.05.1996 KR 9617931
(43) Date of publication of application: 26.11.1997
(73) Proprietor: SAS Technologies Co.Ltd., Seongdong-ku Seoul 133-791 (KR); Hantel Co. Ltd., Seocho-Ku Seol 137-130 (KR)
(72) Inventor: Choi, Seung Won, Do-Bong Gu, Seoul (KR); Yun, Dong Un, Won-Joo Shi, Kang-Won Do (KR)
(74) Representative: Gervasi, Gemma, Dr.

(56) References cited:
- US-A- 5 175 558
- SEUNGWON CHOI ET AL: "ADAPTIVE ANTENNA ARRAY FOR DIRECTION-OF-ARRIVAL ESTIMATION UTILIZING THE CONJUGATE GRADIENT METHOD" SIGNAL PROCESSING EUROPEAN JOURNAL DEVOTED TO THE METHODS AND APPLICATIONS OF SIGNAL PROCESSING, vol. 45, no. 3, 1 September 1995, pages 313-327, XP000556681

## Description

### FIELD OF THE INVENTION

This invention relates to a signal processing technique for wireless communication systems, and more particularly to a signal processing apparatus and method for reducing the effect of interference and noise by controlling beam patterns in real-time, in a communication system utilizing an antenna array.

### BACKGROUND OF THE INVENTION

In general, an original signal transmitted by a certain transmitter (hereinafter, simply called a "wanted signal") is always received at a receiving set together with other plural interfering signals.

Since the level of distortion in a telecommunication system is determined by the ratio between the power of the wanted signal and total power of all the interfering signals, even if the level of the wanted signal is much higher than each of the interfering signals, the distortion of the communication system can pose a serious problem when the total power of all the interfering signals proportionally increased according to the number of the interfering signals is rather high. In conventional telecommunication systems, interfering signals make it very difficult to extract the information from the wanted signal.

Although an antenna array system has been considered as a countermeasure to improve the problems caused by the interfering signals, no practical method of synthesizing the antenna array system in actual telecommunication systems, particularly for mobile communication systems, has yet been suggested. The problems of applying conventional antenna array systems, which is based on the method of Eigen-Decomposition, is mainly due to its complexity and operating speed which is too large for real-time processing in telecommunication systems.

The conventional technique about the antenna array system was introduced in the following references:
[1] M. Kaveh and A. J. Barabell, "The Statistical Performance of the MUSIC and Minimum-Norm Algorithms for Resolving Plane Waves in Noise," IEEE Trans., Acoust., speech and signal process., vol. ASSP-34, pp. 331-341, April 1986.
[2] T. Denidni and G. Y. Delisle, "A Nonlinear Algorithm for Output Power Maximization of an Indoor Adaptive Phased Array," IEEE Electromagnetic Compatibility, vol. 37, no. 2, pp. 201-209, May, 1995.
[3] B. G. Agee, S. V. Schell, and W. A. Gardner, "Spectral Self-Coherence Restoral: A New Approach to Blind Adaptive Signal Extraction Using Antenna Arrays", Proc. of IEEE, Vol. 78, No. 4, pp. 753-767, Apr 1990.

The problems in most conventional methods of designing antenna array system are, first, it, (except the method introduced in [3]), require some knowledge about the location of the wanted signal apriori, and second, it requires so many computations that the real-time processing cannot be performed. Especially, when the arrival angle of the wanted signal or the total number of signal sources is unknown, the required amount of computation becomes even larger, which makes it impossible to apply the conventional method of synthesizing the antenna array system to a practical signal environment, such as mobile communications. Another undesirable feature of most conventional methods of designing antenna array systems is that the performance and/or the complexity of the system to be built is affected by the coherence and/or cross correlation of the wanted signal with respect to the interfering signals. This means that the antenna array system often requires additional complexities when the signals are fully or partially coherent so that the resultant system becomes too complicated for real-time processing, which is very important, especially in mobile communications. Another conventional methods such as the one shown in [3], does not work at all if the wanted signal cannot be extracted from the interfering signals with a particular frequency separation at a proper time lag.

This invention introduces a new signal processing technology of designing an antenna array system that provides for a nice beam pattern having its maximum gain along the direction of the wanted signal maintaining the gain along the direction of interfering signals in a relatively much lower level. Under an assumption that the wanted signal is sufficiently larger in magnitude than each interfering signals, the proposed technique generates the desired beam pattern without requiring any knowledge about the wanted signal as well as the interfering signals.

Another important and attractive aspect of the proposed technique is that the total required amount of computation is so small that the optimal parameters of the antenna array system are produced on a real-time basis. In fact, the signal processing apparatus, which forms the beamforming module of the antenna array system introduced in this invention, can easily be implemented with a normal, off the shelf digital signal processor.

The primary objective of this invention is to introduce a new method of designing a signal processing apparatus, i.e., the beamforming module of an antenna array system, in order to apply it at the base station of a mobile communication system for receiving and transmitting the signal of each subscriber in a cell with a nice beam pattern which is provided individually for each subscriber of the cell. The proposed technique can also be applied in other signal environments such as WLL(wireless local loop) and other fixed communications as well as mobile communications.

### SUMMARY OF THE INVENTION

It is an object of the present invention to provide a signal processing apparatus and method for enhancing the communication quality and increasing the communication capacity by reducing the effects of interference and noises with the nice beam pattern.

And, the inventive signal processing apparatus and method introduce a simplified computational technique for generating the nice beam pattern having its maximum gain along the direction of the wanted signal and maintaining the gain toward the direction of the interfering signals in as low a level as possible.

To accomplish the object of the present invention, there is disclosed a signal processing apparatus for minimizing interference and for reducing effects of noise by controlling beam patterns of a telecommunication system having an antenna array, comprising: a means for computing a parameter, gamma ( γ(*k*)), by utilizing a predetermined adaptive gain (µ), a signal vector (x(t)), each element of which is obtained from received signals at a corresponding antenna element and a final array output signal (y(t)) at the present snapshot; and a means for updating a gain vector (w) by utilizing said gamma parameter (γ(k)), the present value of said gain vector (w), said adaptive gain (µ), said signal vector (x (t))and said final array output (y (t));
where the means for computing said gamma parameter (γ(k)) comprises:
- first multiplying means adapted to compute the squared value of the magnitude of the final array output signal (y (t));
- first adding means adapted to add the result of the first multiplying means to the reciprocal (1/µ) of said adaptive gain (µ);
- second multiplying means adapted to compute the squared value of the result of the first adding means;
- a plurality of multiplying means adapted to compute the squared value of the magnitude of each element of said signal vector (x(t));
- second adding means adapted to add up all the results of said plurality of multiplying means;
- third adding means adapted to add the result of the second adding means to two-times the reciprocal (1/µ) of said adaptive gain (µ);
- third multiplying means adapted to multiply the result of the third adding means by the result of the first multiplying means;
- fourth adding means adapted to subtract the result of the third multiplying means from the result of the second multiplying means;
- means adapted to compute a square root for generating the square root of the result of the fourth adding means; and
- fifth adding means adapted to subtract the result of said square-root-computing means from the result of the first adding means to generate the value of said gamma parameter (γ(k)).

In another aspect of the present invention, there is disclosed a signal processing method for minimizing interference and reducing effects of noise by controlling beam patterns of a telecommunication system having an array antenna, comprising the steps of: (a) computing said gamma parameter (γ(k)) by utilizing said adaptive gain (µ), said signal vector (x(t)) and said final array output signal (y(t)) at the present snapshot; and (b) updating said gain vector (w) by utilizing said gamma parameter (γ(k)), the present value of said gain vector (w), said adaptive gain (µ), said signal vector (x(t)) and said final array output (y(t)).

In another aspect of the present invention, there is disclosed a signal processing apparatus far minimizing interference and far reducing effects of noise by controlling beam patterns of a telecommunication system having an array antenna, comprising: a means for generating an autocorrelation matrix (R) of received signals by utilizing said signal vector (x(t)), each element of which is obtained from received signals at a corresponding antenna element, at every snapshot; a means for computing said gamma parameter (γ(k)) by utilizing said adaptive gain (µ), the present value of said gain vector (w) and said autocorrelation matrix (R) at each snapshot; and a means for updating said gain vector (w) by utilizing said gamma parameter (γ(k)), the present value of said gain vector (w), said adaptive gain (µ) and said autocorrelation matrix (R);
where the means for computing said gamma parameter (γ(k)) comprise:
- first multiplying means adapted to multiply each row of the autocorrelation matrix (R) by the present value of a search directing vector(v);
- second multiplying means adapted to multiply the complex conjugate of each element of the gain vector (w) by the corresponding element of the result of the first multiplying means;
- first computing means adapted to compute the L₂-norm of the result of the first multiplying means;
- third multiplying means adapted to multiply two-times of the reciprocal of the adaptive gain (µ) by the result of the second multiplying means;
- first adding means adapted to add the reciprocal of the adaptive gain (µ) to the result of the second multiplying means;
- second computing means adapted to compute the squared value of the result of the first adding means;
- second adding means adapted to add the results of the first computing means and of the third multiplying means; and
- third computing means adapted to compute the gamma parameter (γ(k)).

Also, in another aspect of the present invention, there is disclosed a signal processing method for minimizing interference and for reducing effects of noise by controlling beam patterns of a telecommunication system having an array antenna, comprising the steps of: (a) generating an autocorrelation matrix (R) of received signals byutilizing said signal vector (x(t)) at every snapshot; (b) computing said gamma parameter (γ(k)) by utilizing said adaptive gain (µ), the present value of gain vector (w) and autocorrelation matrix (R) at each snapshot; and (c) updating said gain vector (w) by utilizing said gamma parameter (γ(k)), the present value of said gain vector (w), said adaptive gain (µ) and said autocorrelation matrix (R).

### BRIEF DESCRIPTION OF THE DRAWINGS

The novel features believed characteristic of the invention, as well as other features and advantages thereof, will best be understood by reference to the following detailed description of a particular embodiment, read in connection with the accompanying drawings, wherein:
FIG. 1 is a block diagram of the signal processing apparatus according to the first embodiment of the present invention.
FIG. 2 is an example of the specified structure of the gamma-computing part shown in Fig. 1;
FIG. 3A is an example of the specified structure of the gain vector updating part shown in Fig. 1;
FIG. 3B is an another example of the specified structure of the gain vector updating part shown in Fig. 1;
FIG. 4 is a block diagram of the signal processing apparatus according to the second embodiment of the present invention.
FIG. 5 is an example of the specified structure of the gamma-computing part shown in Fig. 4;
FIG. 6A is a functional block diagram of the gain vector updating part shown in Fig. 4;
FIG. 6B is another functional block diagram of the gain vector updating part shown in Fig. 4; and
FIG. 17 shows a schematic block diagram of a telecommunication system that utilizes the signal processing apparatus according to the present invention shown in Fig. 1 or 4.

### DETAILED DESCRIPTION OF THE PREFERRED EMBODIMENT

A preferred embodiment of the present invention will be explained below with reference to the accompanying drawings.

The signal processing apparatus that is proposed in this invention generates a beam pattern having its maximum gain along the direction of the wanted signal maintaining the gain to the other directions in as low a level as possible. This can be accomplished by one of two approaches.

The first approach is to optimize the value of the complex gain that is to be multiplied to each signal received at each antenna element, and the other approach is to optimize the value of the phase delay that is to be added to each signal received at each antenna element. Since each element of the gain vector in the first approach is to be weighted (multiplied) to each element of the signal vector, the gain vector is often referred to as the "weight vector" as well.

Only the first approach is explained in detail in this document because of the following two reasons: first, these two approaches are mathematically equivalent, second, the second approach is more costy in hardware and the beamforming performance of the second approach is inferior to the first one in terms of angle accuracy. However, the second approach can easily be implemented by utilizing the procedure explained in this invention. Therefore a signal processing apparatus or signal processing method that is implemented in the second approach should be a part of this invention as long as it utilizes the idea introduced in this document.

In other words, this invention determines the complex gain vector "w" in such a way that the desired beam pattern be formed, and as a result the output of the array antenna system, i.e., the Euclidean inner product of the signals induced at the antenna elements and the complex gain vector, should be as close to the wanted value as possible.

If the magnitude of every element of the complex gain vector is normalized to 1, multiplying the signal received at each antenna element by the corresponding element of the complex gain vector w is equivalent to adding the phase delay to the signal by the amount of the phase term of each corresponding element of the complex gain vector. Therefore, multiplying the signal vector by the gain vector is equivalent to adding the phase of the signal vector by the amount of the phase term of the gain vector.

As mentioned above, the same effect can also be obtained by appending the time delay to the signal received at the i_th antenna element by the amount of φᵢ divided by 2 π *f*_{*c*} *,* where φᵢ and *f*_{*c*} denote the phase delay to be added to the signal received at the i_th antenna element and the carrier frequency, respectively.

For a linear array system having a uniform spacing of $\frac{{\text{λ}}_{\text{c}}}{\text{2}}$between adjacent antenna elements, where λ_{c} denotes the wavelength at the carrier frequency, the signal induced at the m_th antenna element can be represented after the frequency down conversion as follows: 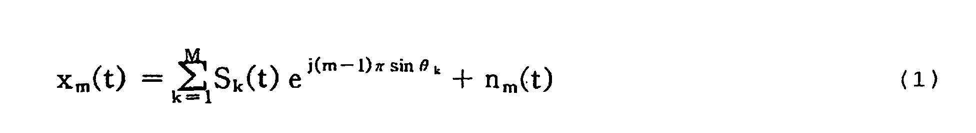 where θₖ denotes the incident angle of the k_th signal and Sₖ(t) is the k_th transmitted signal observed at the receiving end.

The subscript m in equation (1) represents the antenna element. The reference antenna element is assigned to be m=1 and the other antenna elements are assigned the next numbers, i.e., m=2, 3, ..., in the order of the magnitude of the phase of the signal induced at each antenna element.

In eq. (1), one of the M signals is the wanted signal. For example, when the S₁(t) is the wanted signal, the S₁(t) must be received at the antenna array system while all the other M-1 signals, i.e., S₂(t), S₃(t), ..., S_{M}(t), are interfering signals to be rejected together with the noise nₘ(t) for a good signal reception.

Although eq. (1) is valid for the linear array with the uniform half-wavelength spacing, the technique provided in this invention can be generally applied to non-uniform spacing or non-linear array systems as well.

For non-uniform spacing arrays, if the distance of the m_th antenna element from the reference antenna element is dₘ, then there exists a phase difference in the signal induced at the m_th antenna element by 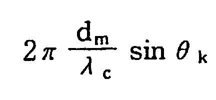 compared to the phase of the signal at the reference antenna element. Thus, the signal induced at the m_th antenna element for non-uniform and/or non-linear array systems can be written as follows:

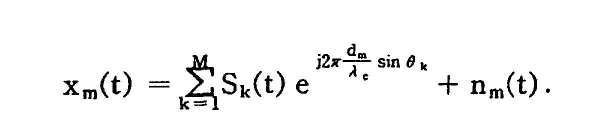

In this invention, in order to make the phase delay to be appended to each antenna element be a positive quantity, the reference antenna element is defined as the antenna element at which the induced signal has the latest phase in the receiving array. In the transmitting array system, therefore, the antenna element at which the induced signal has the earliest phase is the reference antenna element.

Defining the reference antenna element in the way explained above, the array antenna system can easily be designed by appending the zero phase delay to the signal at the reference antenna element and the proper positive amount of the phase delay to the signal at the other antenna elements.

For an array antenna system consisting of N antenna elements, the array receives the N-by-1 signal vector at every snapshot. The autocorrelation matrix of the received signals can be written as shown in eq. (2).

The term "snapshot" in this document denotes the time period during which the new gain vector (or, phase delay vector) is computed upon receiving the new signal vector. In this invention, the array antenna system that adapts to the new signal vector can be designed at each snapshot by determining the proper gain vector (or, phase delay vector) for each new signal vector received at every snapshot. 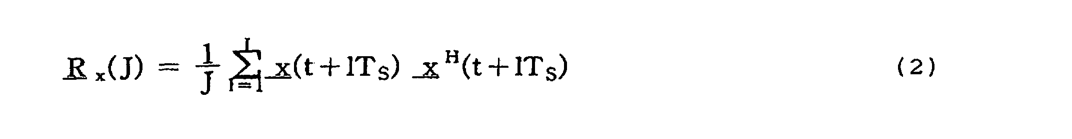 where the underlined quantities denote the vector or matrix, Tₛ is the snapshot period and superscript H is the Hermitian operator. The N-by-1 signal vector x(t), of which the number of elements is N, consists of the received signal xₘ(t) for m = 1, 2, ..., N, which is explained in eq. (1) as follows:${\text{x}}_{̲} {\text{(t)=[x}}_{\text{1}} {\text{(t)x}}_{\text{2}} {\text{(t) ··· x}}_{\text{N}} {\text{(t)]}}^{\text{T}}$ where superscript T denotes the transpose operator.

However, eq. (2) is valid only when the arrival angles of all the signal components remain unchanged. In a time-varying environment where each signal source moves during the communication, as in the mobile communication environment, the autocorrelation matrix cannot be obtained by eq. (2) because the arrival angle of the signal source changes at every snapshot.

Therefore, in time-varying signal environments, it is recommended that the autocorrelation matrix be computed in an iterative manner as follows:${\text{R}}_{̲} {\text{}}_{\text{x}} {\text{(J+1) = f · R}}_{\text{x}} \text{(J) +} {\text{x}}_{̲} {\text{((J+1)T}}_{\text{s}} \text{)} {\text{x}}_{̲} {\text{}}^{\text{H}} {\text{((J + 1)T}}_{\text{s}} \text{)}$ where Rₓ(J+1) and Rₓ(J) denote the autocorrelation matrix at the J+1st and J_th snapshot, respectively, and f denotes the forgetting factor in the range between 0 and 1.

Since communication environments, especially mobile communications, are generally time-varying environments, the autocorrelation matrix in this invention is computed by eq. (4) rather than eq. (2).

From various computer simulations, it is recommended to set the value for the forgetting factor, f, in the range between 0.8 and 0.99 for optimal performances in land mobile communications.

Hereinafter, the design of the optimal array antenna system will be explained in more detail by taking the practical examples of the actual applications.

The eigenvalues {λ_{*i*}} of the autocorrelation matrix, determined by eq. (2) or (4), can be sorted by the magnitude as λ₁ ≥ λ₂ ≥ ... ≥ λ_{N}. The largest eigenvalue λ₁ is determined by the signal components, not the noise components, regardless of the number of signal sources or antenna elements.

Therefore, the eigenvector corresponding to the largest eigenvalue λ₁ exists in the signal subspace as follows: 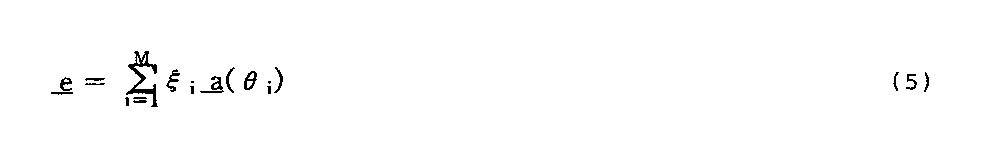 where the complex quantity ξᵢ is a constant determined by the magnitudes and distribution of the wanted and interfering signals, and the vector a(θi) is the steering vector of the i_th signal component in the following form:${\text{a}}_{̲} {\text{(θi) = [1 e}}^{\text{jπ sin θi}} {\text{··· e}}^{\text{j(N-1) π sin θi}} \text{].}$

Now, suppose the magnitude of the wanted signal is sufficiently larger than each of the interfering signals such that the condition shown in (7) is satisfied.${\text{|S}}_{\text{1}} {\text{(t)| >> |S}}_{\text{i}} \text{(t)| for i≠1}$

In a signal environment in which condition (7) is satisfied, the eigenvector λ₁ corresponding to the largest eigenvalue can be approximated as:${\text{e}}_{̲} {\text{}}_{\text{1}} {\text{= ξ}}_{\text{1}} {\text{a}}_{̲} {\text{(θ}}_{\text{1}} \text{).}$

This means that the steering vector, a( θ₁), of the wanted signal is almost the same as the eigenvector corresponding to the largest eigenvalue except that the complex-valued constant, ξ₁, is multiplied.

Therefore, under the condition that the wanted signal is sufficiently larger than each of interfering signals, the maximum gain of the array antenna system will approximately point to the direction of the source of the wanted signal if the gain vector to be appended to the antenna elements of the array system is determined by the eigenvector corresponding to the largest eigenvalue of the autocorrelation matrix of the signals impinging upon the array system.

In conclusion of the above discussions, this invention suggests that the gain vector can be determined by the following equation:${\text{w}}_{̲} \text{=} \frac{\text{1}}{\sqrt{\text{N}}} {\text{e}}_{̲} {\text{}}_{\text{1}} \text{.}$

Now, the practical way of computing the optimal weight vector will be presented.

As mentioned previously, under a particular signal environment where the wanted signal is sufficiently larger than each of interfering signals, an array antenna system having the desired beam pattern, which provides the maximum gain along the direction of the wanted signal source, can be obtained by taking the weight vector w with the normalized eigenvector e₁ corresponding to the largest eigenvalue λ₁ of the autocorrelation matrix.

However, to obtain the autocorrelation matrix itself requires a lot of computations, as shown in eqs. (2) and (4). Moreover, it is not a simple task to compute the eigenvector corresponding to the largest eigenvalue of the matrix. What makes the problem even more complicated is that the arrival angle of each signal changes at every snapshot in mobile communications such that the eigenvector to be obtained varies at every snapshot.

Considering the above-mentioned difficulties, this invention introduces a method of computing the weight vector w with the approximated value for the eigenvector e₁ in an iterative way. This means that the weight vector w is computed by updating the solution of the previous snapshot through the iterative means as follows:${\text{w}}_{̲} \text{(k + 1) =} {\text{w}}_{̲} \text{(k) + ρ(k)} {\text{v}}_{̲} \text{(k)}$ where the independent variable k is the time index representing the snapshot number, and ρ (k) and v(k) are the adaptive gain and search direction vector, respectively. Note that the gain vector w(k+1) shown in equation (10) should be normalized at each snapshot to make the magnitude of the gain vector be 1.

From equation (10), it is observable that the solution at the present snapshot can be obtained by updating the solution of the previous snapshot in the direction indicated by v(k) by the amount indicated by ρ(k).

In order to compute the solution for the gain vector in the iterative manner mentioned above, however, the answers for the following two questions must be satisfied:
First, how do we set the initial value of the gain vector w(0) in the beginning?
Second, how do we set the adaptive gain ρ (k) and the search direction vector v(k) at each snapshot?

In this invention, the initial value of the gain vector w(0) is determined from the received signal vector x(0) as follows:${\text{ω}}_{̲} \text{(0)=} \frac{{\text{x}}_{̲} \text{(0)}}{{\text{x}}_{\text{1}} \text{(0)}}$ where *x*₁(0), i.e., the first element of the signal vector *x*(0), is the signal induced at the reference antenna element at the very first snapshot.

The reason why the vector *w*(0) can be determined by the equation (11) is that the received signal vector itself x(0) must be a good approximation for the searching eigenvector because the rank of the matrix at the initial snapshot is 1, such that the number of the distinct nonzero eigenvalue is only 1, which must correspond to the signal received at the very first snapshot if the signal to noise ratio (SNR) is reasonably high.

It is recommended that the magnitude of the adaptive gain (µ) does not exceed the reciprocal of N times of the average power of the input signals, in order for the entire procedure of designing the antenna array system to converge, where N denotes the number of antenna elements.

Starting from the initial value shown in (11), this invention introduces a new technique of designing the antenna array system by updating the weight vector in the manner shown in equation (10). As mentioned previously, the key parts in updating the weight vector, as shown in equation (10), is to determine the search direction vector v(k) and the adaptive gain ρ(k).

In order to find the search direction vector, let's consider a cost function defined as follows:$\text{f(} {\text{w}}_{̲} \text{) =} {\text{w}}_{̲} {\text{(k)}}^{\text{H}} {{\text{R}}_{̲}}_{̲} {{\text{}}_{\text{x}}}_{̲} {\text{w}}_{̲} \text{(k) + γ (1-} {\text{w}}_{̲} {\text{(k)}}^{\text{H}} {\text{w}}_{̲} \text{(k))} \text{with a constraint |} {\text{w}}_{̲} {\text{(k)|}}^{\text{2}} \text{= 1.}$

As can be verified mathematically, the maximum eigenvalue of the autocorrelation matrix Rₓ can be obtained by finding the maximum value of the functional (12), and the vector w corresponding to the maximum value of the functional (12) is an eigenvector corresponding to the maximum eigenvalue of the matrix Rₓ.

Since the gain vector w of the antenna array system should be determined by the eigenvector corresponding to the maximum eigenvalue in order to form a nice beam pattern having its maximum gain along the direction of the target signal source, a search direction vector that maximizes the cost function (12) is to be found.

The desired search direction vector described above can be obtained by setting the gradient of the function (12) with respect to the weight vector to be zero as follows:${\text{∇}}_{̲} \text{= 2} {{\text{R}}_{̲} {\text{}}_{\text{x}}}_{̲} {\text{w}}_{̲} \text{- 2γ} {\text{w}}_{̲} \text{= 0.}$

In order to compute the gain vector satisfying equation (13) in an iterative manner as shown in equation (10), the search direction vector *v*(*k*) is set utilizing the result of equation (13) as follows:${\text{w}}_{̲} \text{(} \text{k} \text{+1) =} {\text{w}}_{̲} \text{(} \text{k} \text{) +} \frac{\text{1}}{\text{2}} \text{µ} {\text{∇}}_{̲} \text{=} {\text{w}}_{̲} \text{(} \text{k} \text{) + µ} {\text{v}}_{̲} \text{(} \text{k} \text{)} \text{=} {\text{w}}_{̲} \text{(} \text{k} \text{) + µ[} {{\text{R}}_{̲} {\text{}}_{\text{x}}}_{̲} \text{(} \text{k} \text{)} {\text{w}}_{̲} \text{(} \text{k} \text{) - γ(} \text{k} \text{)} {\text{w}}_{̲} \text{(} \text{k} \text{)]} \text{= [(1-µγ(} \text{k} \text{))} {\text{I}}_{̲} \text{+µ} {\text{R}}_{̲} \text{]} {\text{w}}_{̲} \text{(} \text{k} \text{).}$

It can be observed from equation (14) that the value for gamma γ should be computed at each snapshot in order to obtain the gain vector w. The optimal value for gamma can be computed by substituting equation (14) into the constraint of equation (12) to result in the following expression for gamma:${\text{γ}}^{\text{2}} \text{(} \text{k} \text{)} \text{-} \text{2 [} \frac{\text{1}}{\text{µ}} \text{+} {\text{w}}_{̲} {\text{}}^{\text{H}} \text{(} \text{k} \text{)} {{\text{R}}_{̲} {\text{}}_{\text{x}}}_{̲} \text{(} \text{k} \text{)} {\text{w}}_{̲} \text{(} \text{k} \text{)] γ(} \text{k} \text{) +} {\text{w}}_{̲} {\text{}}^{\text{H}} \text{(} \text{k} \text{)} {{\text{R}}_{̲} {\text{}}_{\text{x}}^{\text{2}}}_{̲} \text{(} \text{k} \text{)} {\text{w}}_{̲} \text{(} \text{k} \text{)+} \frac{\text{2}}{\text{µ}} {\text{w}}_{̲} {\text{}}^{\text{H}} \text{(} \text{k} \text{)} {{\text{R}}_{̲} {\text{}}_{\text{x}}}_{̲} \text{(} \text{k} \text{)} {\text{w}}_{̲} \text{(} \text{k} \text{) = 0.}$

Putting two terms of equation (15) as follows$\text{a} \text{= [} \frac{\text{1}}{\text{µ}} \text{+} {\text{w}}_{̲} {\text{}}^{\text{H}} \text{(} \text{k} \text{)} {{\text{R}}_{̲} {\text{}}_{\text{x}}}_{̲} \text{(} \text{k} \text{)} {\text{w}}_{̲} \text{(} \text{k} \text{) ],}$$\text{b} \text{=} {\text{w}}_{̲} {\text{}}^{\text{H}} \text{(} \text{k} \text{)} {{\text{R}}_{̲} {\text{}}_{\text{x}}^{\text{2}}}_{̲} \text{(} \text{k} \text{)} {\text{w}}_{̲} \text{(} \text{k} \text{) +} \frac{\text{2}}{\text{µ}} {\text{w}}_{̲} {\text{}}^{\text{H}} \text{(} \text{k} \text{)} {{\text{R}}_{̲} {\text{}}_{\text{x}}}_{̲} \text{(} \text{k} \text{)} {\text{w}}_{̲} \text{(} \text{k} \text{),}$ the value for gamma satisfying equation (15) can be obtained as γ(*k*) *= a* ±$\sqrt{{\text{a}}^{\text{2}} \text{-b}}$. The smaller value for gamma is selected as follows:$\text{γ(} \text{k} \text{) =} \text{a} \text{-} \sqrt{{\text{a}}^{\text{2}} \text{-} \text{b}} \text{.}$

The entire procedure of computing the gain vector can be summarized as follows:

At the initial stage, the gain vector is set with the signal vector at the very first snapshot as w(0) = x(0)/x₁(0). The initial autocorrelation matrix is also set with the initial signal vector as Rₓ(0) = x(0) x^{H} (0).

As the snapshot continues, the autocorrelation matrix is updated upon the reception of a new signal vector based on equation (4). The value for gamma and gain vector are obtained according to equations (16) and (14), respectively. The update of the autocorrelation matrix, gamma, and gain vector is repreated with the new signal vector at every snapshot.

According to the technique presented in this invention, the entire procedure of computing the gain vector and obtaining the final array output with the computed gain vector at each snapshot is tremendously simplified. The simplification of the proposed method is mainly due to the fact that the technique disclosed in this invention does not require any apriori information regarding the location of the target signal source or interfering signal sources. Consequently, the proposed technique makes it possible to perform real-time processing of reception and transmission of the signals in most practical signal environments, such as mobile communications, by utilizing an ordinary, off the shelf digital signal processor (DSP).

In fact, as shown in equations (4), (13) and (15), the total computational load for obtaining the gain vector is about O(2N²+6N) at each snapshot. It has been confirmed in various computer simulations that the computational load of O(2N²+6N) is small enough to perform real-time processing of computing the gain vector and finally generating the array output utilizing a general-purpose DSP as long as the relative speed of the transmitter and receiver does not exceed 150km/h, as in land mobile communication.

Although the amount of computation of the proposed technique has been reduced tremendously compared to the conventional methods, the complexity of this procedure increases in the second order of N, as the number N of antenna elements increases. The main reason for this is that the procedure includes the matrix operations.

This invention discloses another technique of reducing the required amount of computation by setting the forgetting factor in computing the autocorrelation matrix with a particular value.

Suppose the forgetting factor in equation (4) is set to be 0. This particularly means that the autocorrelation matrix is computed only with the instantaneous signal vector at each snapshot. Then, the entire procedure presented previously is much more simplified.

As a matter of fact, when the incident angle of the input signal varies significantly at each snapshot, it is not useful to consider the signal vector of the previous snapshots in computing the autocorrelation matrix.

First, the computation of the autocorrelation matrix is simplified as follows:${{\text{R}}_{̲} {\text{}}_{\text{x}}}_{̲} \text{(J)≈} {\text{x}}_{̲} \text{(J)} {\text{x}}_{̲} {\text{}}^{\text{H}} \text{(J).}$

Substituting equation (19) into equations (13) through (15), the update of the search direction vector, gamma and gain vector is also simplified, respectively, as follows:${\text{v}}_{̲} \text{(} \text{k} \text{) =} \text{y*} \text{(} \text{k} \text{)} {\text{x}}_{̲} \text{(} \text{k} \text{) - γ(} \text{k} \text{)} {\text{w}}_{̲} \text{(} \text{k} \text{) ,} \text{γ} \text{(} \text{k} \text{)} \text{= a} \text{-} \sqrt{{\text{a}}^{\text{2}} \text{-b}} \text{,}$ where,$\text{a} \text{=} \frac{\text{1}}{\text{µ}} \text{+ |} \text{y} \text{(} \text{k} {\text{)|}}^{\text{2}} \text{,} \text{b} \text{= |} \text{y} \text{(} \text{k} {\text{)|}}^{\text{2}} \text{[∥} {\text{x}}_{̲} \text{(} \text{k} {\text{)∥}}^{\text{2}} \text{+} \frac{\text{2}}{\text{µ}} \text{],}$ and${\text{w}}_{̲} \text{(} \text{k} \text{+1) =} {\text{w}}_{̲} \text{(} \text{k} \text{)} \text{+ µ} {\text{v}}_{̲} \text{(} \text{k} \text{)} \text{=} \text{[1-µγ(} \text{k} \text{)]} {\text{w}}_{̲} \text{(} \text{k} \text{) +} \text{µy} \text{*(} \text{k} \text{)} {\text{x}}_{̲} \text{(} \text{k} \text{).}$

Note that *y*(*k*) is the array output at the k_th snapshot, which is defined as *y*(*k*) *= w*^{*H*}(*k*)*x*(*k*).

As shown in equation (21), if the forgetting factor is fixed at zero, then, since the matrix is determined by the signal vector of the present snapshot only, the procedure of computing the optimal weight vector is considerably simplified. Moreover, the computation of the matrix at each snapshot is not needed at all, which means the calculation of equation (4) vanishes out of the entire procedure.

From the numerical results obtained in the computer simulations, the proposed method, which accounts for the last previous signal vectors as well as for the present signal vector for computing the autocorrelation matrix at each snapshot, provides about a 12-15dB improvement in SIR (signal-to-interference ratio), whereas the noise power is reduced by the number of antenna elements, i.e., the SNR (signal-to-noise ratio) is increased by the factor of N.

On the other hand, the other method, which uses only the instantaneous signal vector at each snapshot, provides almost the same amount of improvement according to the noises, while about a 10-12dB improvement is obtained in terms of the SIR (signal-to-interference ratio).

Consequently, the simplified version of the proposed method, which uses the signal vector at the present snapshot only, causes a degradation in SIR performance by about 2-3dB compared to the original version of the proposed method which uses the signal vectors of the previous snapshots as well as the current signal vector in computing the autocorrelation matrix. However, since the complexity of the entire procedure is tremendously reduced, a simplified version would cause a much easier implementation and cost reduction.

Designing the array antenna system utilizing a simplified method, all the operations requiring the computational load of O(N²) disappear and the total computational load of the entire procedure becomes about 7N+16 additions and 4N+7 multiplications.

In order to implement the total system, which encounters both receiving and transmitting modes, the optimal weight vector computed during the receiving mode can be applied to obtain the optimal parameters for the transmitting mode.

As mentioned previously, when the proposed signal processing apparatus, which provides the desired beam pattern, is adopted at the cell-site antenna system, we can achieve not only an increase of the channel capacity and an enhancement of the communication quality but also a considerable extension of the battery's life with each subscriber in the cell.

An extension of the battery's life with each subscriber can be achieved because the cell-site antenna system adopting the proposed beamforming technique provides much better communication efficiency by generating the main lobe along the direction of the wanted signal source compared to the conventional cell-site antenna system.

Therefore, it is possible to perform an acceptable communication even with much less transmitting power at each subscriber's end. To reduce the transmitting power at each subscriber directly causes the life extension of the battery at each of the subscribers.

Now, an explanation of the proposed apparatus and method in more detail will follow by taking practical examples.

### Embodied Example 1

In this embodied example, a signal processing apparatus is introduced which computes the gain vector in real-time in order to generate the optimal beam pattern at the telecommunication system that employs the array antenna system. In this example, the autocorrelation matrix is updated with the instantaneous signal vector at each snapshot based on (19). Therefore, the autocorrelation matrix is actually not computed. As mentioned previously, the gain vector is obtained from equation (21). The implementation of the signal processing apparatus is explained in detail as the first embodied example as follows.

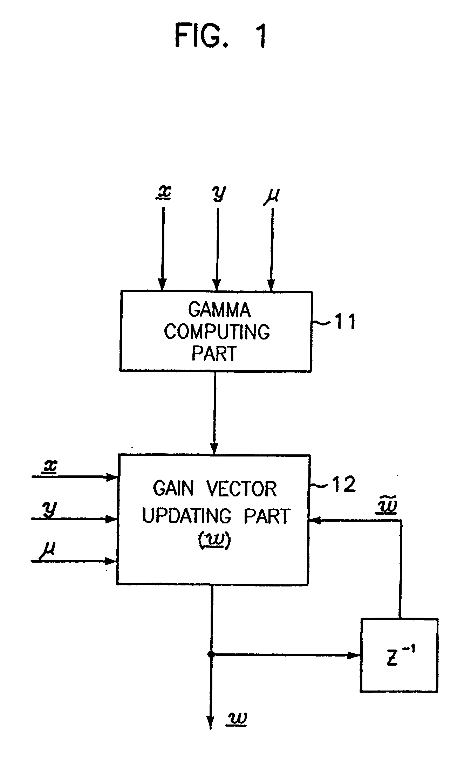

FIG. 1 is a block diagram of the signal processing apparatus according to an embodiment of the present invention.

As illustrated in the figure 1, the signal processing apparatus according to the first embodiment of the present invention comprises a gamma computing part 11 for computing the gamma (γ(*k*)) and a gain vector updating part 12 for updating the gain vector (w).

The gamma computing part 11 synthesizes the gamma (γ(*k*)) by using a predetermined adaptive gain (µ), a signal vector (x(t)), each element of which is obtained from the received signal at the corresponding antenna element, and a final array output signal (y(t)) at the present snapshot.

The gain vector updating part 12 updates the gain vector (w) by utilizing the gamma *(* γ(*k*)), the present value of the gain vector (w), the adaptive gain (µ), the signal vector(x(t)) and the final array output (y(t)) at the present snapshot.

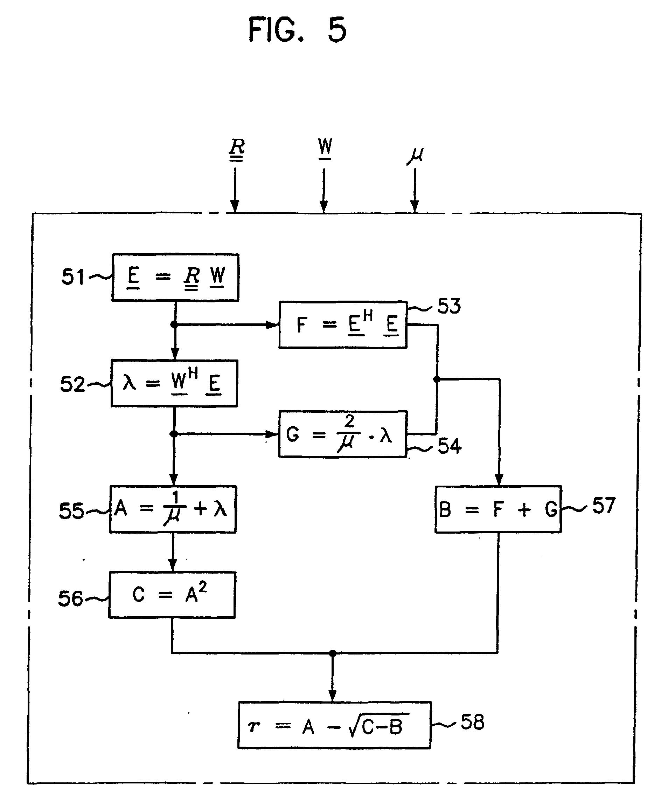

Each part described above can be implemented in a form of software in a computing system as well as in a form of hardware that is properly designed according to the procedures given in this invention. The ultimate goal of the signal processing apparatus is to generate the the gain vector (w) providing the optimal beam pattern for the telecommunication system that employs the array antenna to produce the final array output signal (y(t)) by computing the inner product between the signal vector received at the present snapshot and the gain vector (w). The details of computing the inner product is shown in Fig. 5.

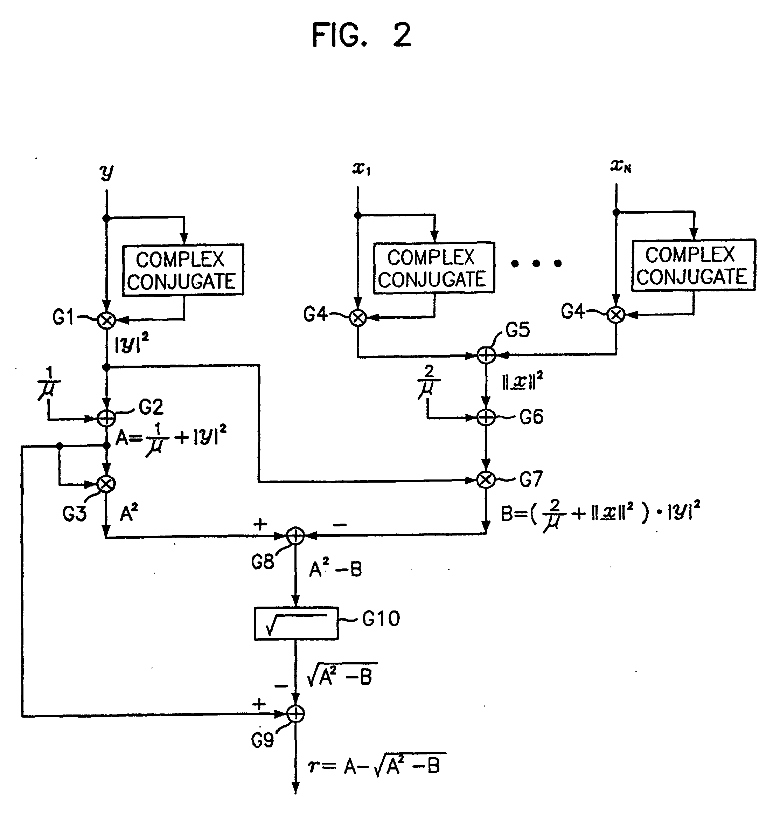

Fig. 2 illustrates an example of the specified structure of the gamma computing part 11, which is a part of the signal processing apparatus shown in Fig. 1.

As shown in Fig. 2, the gamma computing part 11 comprises the following parts: a multiplying part G1 for computing the squared value of the magnitude of the final array output (y(t)); an adding part G2 for adding the result of said multiplying part G1 to the reciprocal ($\frac{\text{1}}{\text{µ}}$) of said adaptive gain; a multiplying part G3 for computing the squared value of A, where A denotes the result of said adding part G2; a plurality of multiplying parts G4 for computing the squared value of the magnitude of each element of said signal vector(x); an adding part G5 for adding up all the results of said multiplying parts G4; an adding part G6 for adding the result of said adding part G5 to two-times ($\frac{\text{2}}{\text{µ}}$) of the reciprocal ($\frac{\text{1}}{\text{µ}}$) of said adaptive gain (µ); a multiplying part G7 for multiplying the result of said adding part G6 by the result (|*y*|²) of said multiplying part G1; an adding part G8 for subtracting B from the result A² of said multiplying part G3 where B denotes the result of said multiplying part G7; a part G10 of computing a square root for generating the square root of the result of said adding part G8; and an adding part G9 for subtracting the result of said square-root-computing part G10 from the result of said adding part G2.

The above-described parts can be implemented by means of software in a computing system or by means of hardware.

The entire procedure can be summarized on a step-by-step basis as follows.

The squared value of the magnitude of said final array output is obtained (first step) . The reciprocal ($\frac{\text{1}}{\text{µ}}$) of said adaptive gain (µ) is added to the result of G1 (second step). The squared value of A is computed, where A denotes the result of G2 (third step). The squared value of the magnitude of each element of said signal vector (x) is computed (fourth step). All the results of G4 are added up (fifth step). The result of G5 is added to two-times the reciprocal of said adaptive gain (µ), i.e., ($\frac{\text{2}}{\text{µ}}$) (sixth step). The result of the procedure of G6 is multiplied by the result (|*y*|²) of G1 (seventh step). B is subtracted from the result (A²) of G3 where B denotes the result of G7 (eighth step). The square root of the result of G8 is computed (ninth step). And the result of G9 is subtracted from the result of G2, and thus, the resultant value of said gamma is produced as *γ = A* - $\sqrt{{\text{A}}^{\text{2}} \text{-} \text{B}}$ (tenth step).

Through the procedures presented above, the resultant gamma can also be viewed as γ = *A -* $\sqrt{{\text{A}}^{\text{2}} \text{-} \text{B}}$ where A and B denote $\frac{\text{1}}{\text{µ}}$ + *w*^{*H*} *R w* and *w*^{*H*} *R*² *w* + $\frac{\text{2}}{\text{µ}}$ *w*^{*H*} *R w*, respectively, with *R* being the autocorrelation matrix.

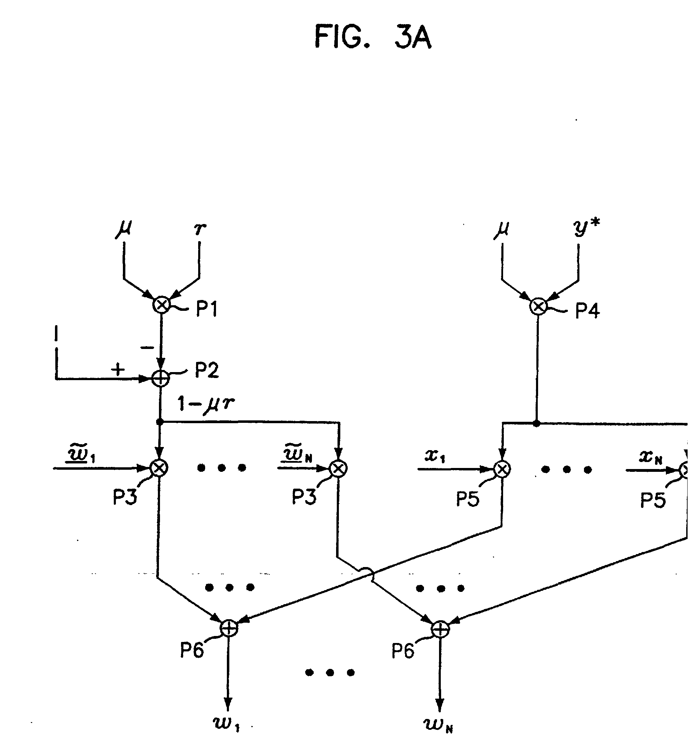

Fig. 3a illustrates an example of the specified structure of the gain vector updating part 12, which is a part of said signal processing apparatus shown in Fig. 1.

As shown in Fig. 3a, the gain vector updating part comprises the following procedures: a multiplying part P1 for multiplying said gamma γ by said adaptive gain µ ; an adding part P2 for subtracting the result of said multiplying procedure P1 from 1; a plurality of multiplying parts P3 for multiplying the present value of each element of said gain vector by the result of said adding procedure P2; a multiplying part P4 for multiplying the complex conjugate of said final array output by said adaptive gain; a plurality of multiplying parts P5 for multiplying each element of said signal vector (x) by the result of said multiplying part P4; and a plurality of adding parts P6 for adding each output of said multiplying parts P3 to the corresponding output of said multiplying parts P5.

The outputs of the plural adding parts P6 form the final output of said gain vector updating part at each snapshot.

The above-described procedures can also be implemented by means of software in a computing system as well as by means of hardware.

The entire procedure can be summarized on a step-by-step basis as follows.

The gamma (γ) is multiplied by said adaptive gain (µ) (first step). The result of said P1 is subtracted from 1 (second step). The present value of each element of said gain vector is multiplied by the result of P2 (third step). The complex conjugate of the present value of said final array output (y) is multiplied by said adaptive gain (µ) (fourth step). Each element of said signal vector at the present snapshot is multiplied by the result of P4 (fifth step). And each result of said P3 is added to each result of said P5, and thus, said gain vector is updated by *w* ← (1-µγ) *w* + µ*y***x* (sixth step).

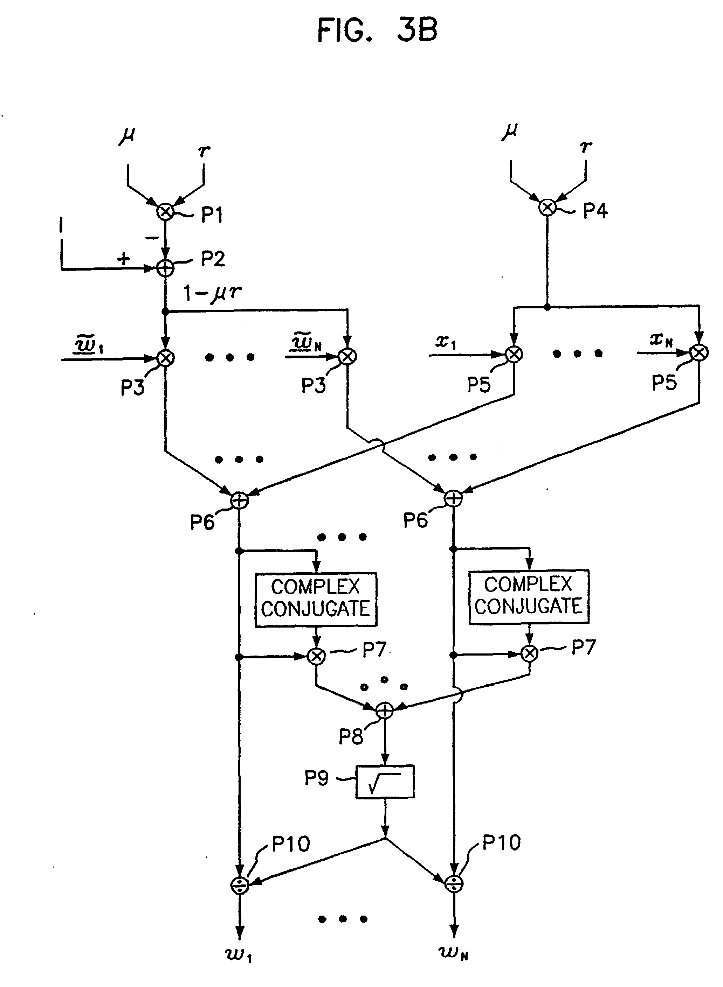

Fig. 3b illustrates another example of the specified structure of the gain vector updating part 12, which is a part of said signal processing apparatus shown in Fig. 1.

The gain vector updating part shown in Fig. 3b includes procedures for normalizing the resultant gain vector in addition to all the procedures that were in said gain vector updating part shown in Fig 3a.

Since the procedures P1 to P6 are exactly the same as those in Fig. 3a, only the additional procedures P7, P8, P9 and P10 for normalization of said gain vector are explained.

As shown in Fig 3b, the gain vector updating part further comprises the following parts: a plurality of multiplying parts P7 for computing the squared value of the magnitude of each output of said adding parts P6; an adding part P8 for adding up all the outputs of said multiplying parts P7; a part of computing square root P9 for obtaining the square root of the result of said P8; and a plurality of dividing parts P10 for dividing each output of said P6 by the result of said P9.

The above-described parts can also be implemented by means of software in a computing system or by means of hardware.

The entire procedure of Fig. 3b is for updating the gain vector by *w* ← (1-µγ) *w* + µ*y***x* and then normalizing the resultant vector by${\text{w}}_{̲} \text{←} \frac{\text{w}}{\text{∥} {\text{w}}_{̲} \text{∥}} \text{.}$

Therefore, the magnitude of the gain vector produced in accordance with Fig. 3b is always normalized to be 1.

### Embodied Example 2

Here, another example of implementing a signal processing apparatus is introduced which computes the gain vector in real-time in order to generate the optimal beam pattern in the telecommunication system that employs the array antenna system. In this example, the autocorrelation matrix is computed with the signal vectors based on equation (4). By adopting a proper value for the forgetting factor, the autocorrelation matrix is updated at each snapshot. As mentioned previously, the gain vector is obtained from equation (14).

Although the complexity of the signal processing technique disclosed in this example is a little heavier than that of the first example, the performance is a little better in terms of a SIR or BER improvement. Therefore, the first example can be applied to a relatively simple system, whereas the second example can be applied to a larger system that requires more accuracy. The implementation of the signal processing apparatus is explained in detail as the second embodied example as follows.

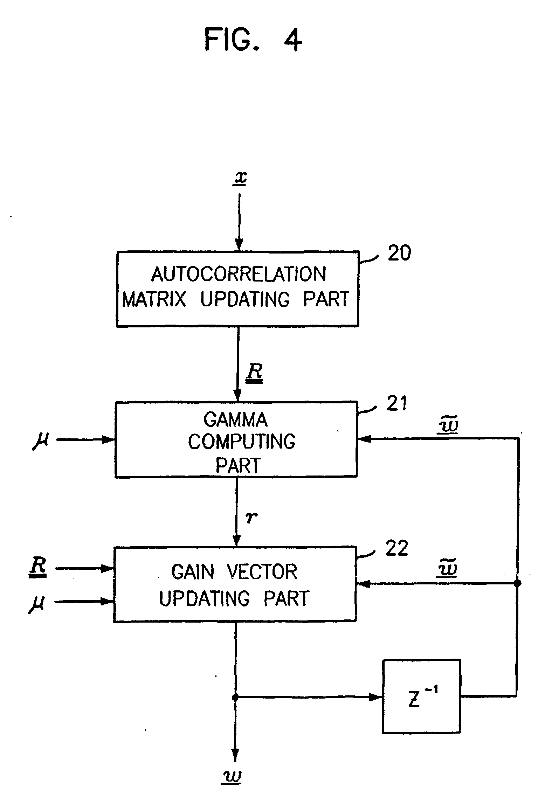

FIG. 4 is a block diagram of the signal processing apparatus according to an embodiment of the present invention.

The signal processing apparatus according to the second embodiment of the present invention comprises an autocorrelation matrix updating part 20, a gamma computing part 21 and a gain vector updating part 22.

The autocorrelation matrix updating part 20 computes a new value for the autocorrelation matrix at each snapshot upon the reception of a new signal vector(x), each element of which is obtained from the signal induced at the corresponding antenna element of the array system at every snapshot.

The gamma computing part 21 computes the value for gamma(γ) by utilizing said autocorrelation matrix(*R*), said adaptive gain(µ) and the present value of said gain vector(w).

The gain vector updating part 22 updates the gain vector by utilizing said gamma(γ), the autocorrelation matrix(*R*), the adaptive gain(µ) and the present value of said gain vector(w).

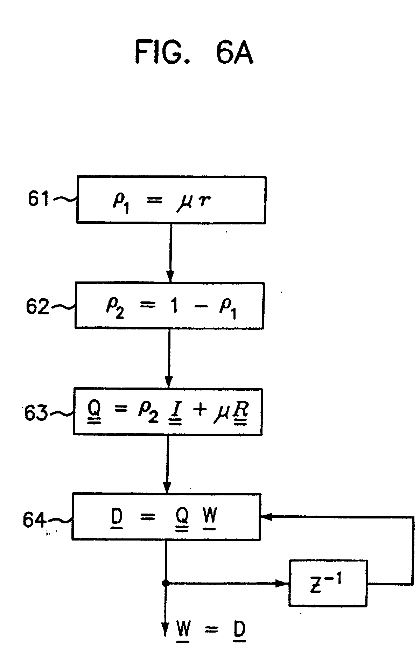

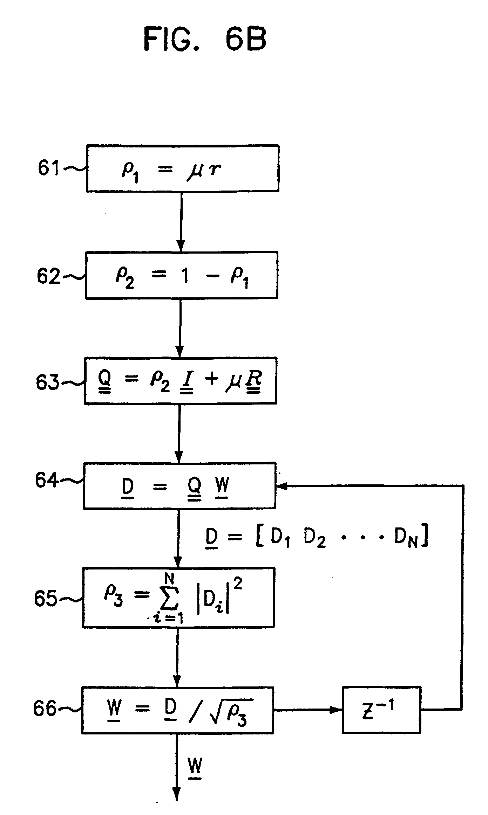

As mentioned previously, every part included in the signal processing apparatus shown in Fig. 4 can be implemented by means of software in a computing system as well as hardware. The details in each part of the signal processing apparatus are shown in Figs. 5, 6a and 6b.

FIG. 5 is a functional block diagram of the gamma computing part, illustrated in Fig. 4, according to an embodiment of the present invention.

The gamma computing part according to the second embodiment of the present invention computes the value for said gamma by utilizing the autocorrelation matrix, the present value of the gain vector and the adaptive gain through a computational procedure described as follows.

Each row of the autocorrelation matrix is multiplied by the present value of said signal vector to produce a vector *E*, i.e., *E* = *R w* (first step, 51). The complex conjugate of each element of the gain vector is multiplied by the corresponding element of *E*, i.e., λ = *w*^{*H*} *E* (second step, 52). The L₂-norm of the vector *E* is computed, i.e., *F = E*^{*II*} *E* (third step, 53). Two-times of the reciprocal of the adaptive gain is multiplied by λ, i.e., G = $\frac{\text{2}}{\text{µ}}$ λ (fourth step, 54). The reciprocal of the adaptive gain is added to λ, i.e., *A* = $\frac{\text{1}}{\text{µ}}$ + λ (fifth step, 55). The squared value of *A* is computed, i.e., *C* = *A*² (sixth step, 56). *F* is added to *G*, i.e., *B* = *F + G* (seventh step, 57). And, the gamma is computed by γ *= A* - $\sqrt{\text{C-B}}$ (eighth step, 58).

FIG. 6a is a functional block diagram of the gain vector updating part, illustrated in Fig. 4, according to an embodiment of the present invention.

The gain vector updating part according to the second embodiment of the present invention updates the value for the gain vector by utilizing the autocorrelation matrix, the present value of the gain vector, and the adaptive gain through a computational procedure described as follows.

The adaptive gain is multiplied by the gamma, i.e., ρ₁ = µγ (first step, 61). The result of the first step 61 is subtracted from 1, i.e., ρ₂ = 1-ρ₁ (second step, 62). The result of the second step 62 is added to the main diagonal elements of matrix µ*R* to produce resultant matrix *Q*, i.e., *Q* = ρ₂*I +* µ*R* (third step, 63). And, the gain vector is updated by *w* ← *Q w (fourth* step, 64).

FIG. 6b is a functional block diagram of the gain vector updating part, illustrated in Fig. 4, according to an embodiment of the present invention.

The gain vector updating part shown in Fig. 6b includes normalization procedures in addition to what is included in the gain vector updating part shown in Fig. 6a.

The gain vector updating part according to the second embodiment of the present invention updates the value for the gain vector by utilizing the autocorrelation matrix, the present value of the gain vector, and the adaptive gain through a computational procedure described as follows.

The adaptive gain is multiplied by the gamma, i.e., ρ₁ = µγ (first step, 61). The result of the first step 61 is subtracted from 1, i.e., ρ₂ = 1 - ρ₁ (second step, 62). The result of the second step 62 is added to the main diagonal elements of matrix µ*R* to produce resultant matrix *Q*, i.e., *Q* = *ρ*₂*I* + µ*R* (third step, 63). The *Q* matrix is multiplied by the present value of the gain vector, i.e., *D* = *Q w* (fourth step, 64). The magnitude of each element of the vector *D* is squared and the results of the squaring are added up together, i.e., 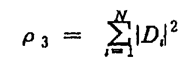 (fifth STEP, 65). And, the vector *D* is divided by ρ₃ to produce the updated gain vector, i.e.,${\text{w}}_{̲} \text{←} \frac{\text{D}}{\sqrt{{\text{ρ}}_{\text{3}}}}$ (sixth step, 66).

The gain vector produced in Fig 6b is normalized for the magnitude of the resultant gain vector to be 1 at each snapshot.

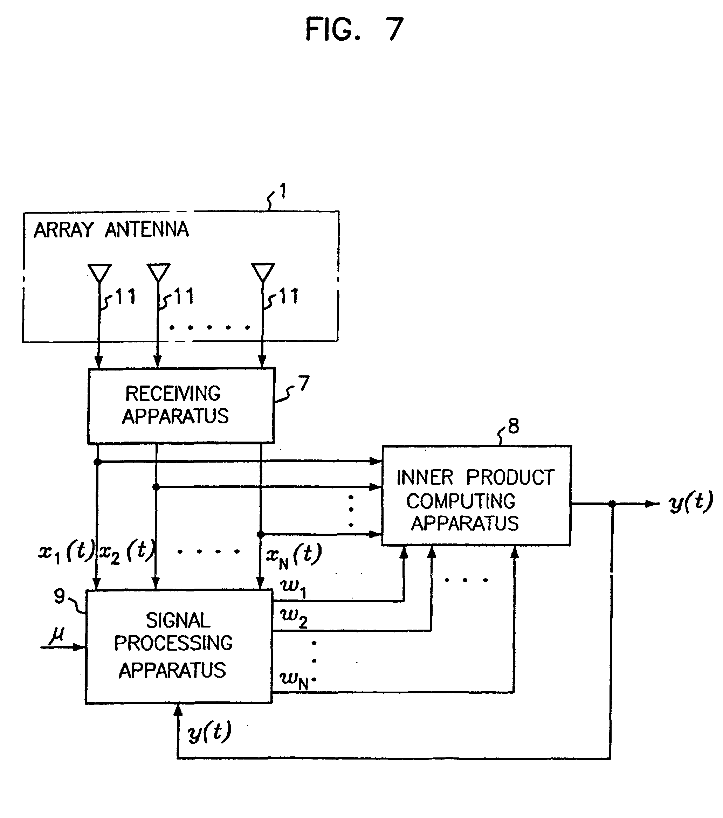

FIG. 7 shows a schematic block diagram of a telecommunication system that utilizes the signal processing apparatus according to the present invention shown in Fig. 1 or 4.

In Fig. 7, the reference number 1 denotes an array antenna, 7 a receiving apparatus, 8 an inner product computing apparatus (which is sometimes denoted as the part of generating the final array output), and 9 the signal processing apparatus according to the present invention, respectively.

As illustrated in the figure, the telecommunication system comprises the following parts: the array antenna 1 (or, called simply, "array", "antenna array", or, "array of antenna elements"), composed of the plural antenna elements 11, each of which is arranged by a predetermined geometry, that supplies the signal induced at each antenna element to the corresponding port of the receiving apparatus 7; the signal receiving apparatus 7 that generates the signal vector (x(t)) from the signals induced at each antenna element of the antenna array 1 by utilizing the proper signal-receiving parts, such as filtering, frequency-down-conversion and demodulation (or, quasi-quadrature detection); the inner product computing apparatus 8 for generating the final array output (y(t)) by computing the Euclidean inner product between the two complex-valued vectors, (y(t) = w^{H} x(t)), i.e., the signal vector (x(t)) produced from the receiving part 7 and the gain vector (w) provided from the signal processing apparatus 9; and the signal processing apparatus 9 that computes the gain vector (w) by processing the signal vector (x(t)) together with the final array output (y(t)) obtained at the last previous snapshot for the inner product computing apparatus 8 to generate the final array output (y(t)) at the present snapshot.

The telecommunication system consists of the receiving apparatus 7, the signal processing apparatus 9 and the inner product computing apparatus 8 for generating the final array output. The receiving apparatus generates the signal vector (x(t)) from the signals induced at the antenna elements 11 through a conventional signal reception part, such as a frequency-down-conversion and demodulation (or quasi-quadrature detection).

When the technique provided in this invention is applied in the CDMA (Code Division Multiple Access) system, the receiving apparatus 7 includes a cross-correlation part for cross-correlating the received signal with the code sequence assigned to the wanted signal source. The signal vector (x(t)) obtained from the receiving apparatus 7 is sent to the signal processing apparatus 9 and the inner product computing apparatus 8.

The signal processing apparatus 9 produces the optimal gain vector (w), which is sometimes referred to as the "weight vector", from the signal vector (x(t)) at the present snapshot and the final array output (y(t)) computed at the last previous snapshot. The optimal weight vector (w) is sent to the inner product computing apparatus for the final array output (y(t)) of the next snapshot to be computed as a result of the inner product of the signal vector (x(t)) and weight vector (w), i.e., y(t) = w^{H} x(t).

The key part of the telecommunication system shown in Fig. 7 is the signal processing apparatus 9 producing the optimal weight vector (x(t)), which gives the array antenna system the optimal beam pattern having its maximum gain along the direction of the wanted signal source and small gain to the direction of the interfering signal sources.

As mentioned earlier, the signal processing apparatus or signal processing technique provided in this invention gives the following advantages: first, the communication capacity is increased as much as the signal-to-interference ratio is increased, and second, the communication quality is enhanced as much as the signal-to-noise ratio and the signal-to-interference ratio is increased. The best feature of the proposed technique in this invention is that the required amount of computation to achieve all the merits is extremely small so that the proposed technique can be easily implemented with the normal digital signal processor in real-time processing.

Although the specific embodiments of the present invention have been disclosed and described, it is apparent that those who skilled in the art will appreciate that various modifications, additions and substitutions are possible, without departing from the present invention as disclosed in the accompanying claims. Therefore, it should be understood that the present invention is not limited to the particular embodiment disclosed herein as the best mode contemplated for carrying out the present invention.

## Claims

1. A signal processing apparatus adapted to minimise interference and to reduce effects of noise by controlling beam patterns of a telecommunication system having an array antenna, **characterised by** comprising:
- a means adapted to computing a parameter gamma γ(k), by utilising a predetermined adaptive gain µ, a signal vector x (t), each element of which is obtained from received signals at a corresponding antenna element, and a final array output signal y (t) at a present snapshot; and
- a means adapted to updating a gain vector w by utilising said parameter gamma γ(k), the present value of said gain vector w, said adaptive gain µ, said signal vector x (t) and said final array output y (t);
where
- γ(k) is a coefficient for updating, at each snapshot k, a search directive vector v(k);
- µ is an adaptive coefficient for updating the gain vector w used for forming the desired beam pattern of an array antenna of a telecommunication system;
- y(t) is the final array output signal, computed as a result of the inner product of the signal vector x(t) and the gain vector w;
- the gain vector w is updated based on the adaptive gain µ(k) and on the search directive vector v(k), where µ(k) and v(k) are the values of the adaptive gain µ, respectively, of the search directive vector v at the k-th snapshot;
further **characterised in that** said means adapted to computing said parameter gamma γ(k) comprises:
- a first multiplying means adapted to compute the squared value of the magnitude of the final array output y (t);
- a first adding means adapted to add the result of the first multiplying means to the reciprocal (1/µ) of said adaptive gain µ;
- a second multiplying means adapted to compute the squared value of A, where A denotes the result of the first adding means;
- a plurality of multiplying means adapted to compute the squared value of the magnitude of each element of said signal vector x;
- a second adding means adapted to add up all the results of said plurality of multiplying means;
- a third adding means adapted to add the result of the second adding means to two-times the reciprocal (1/µ) of said adaptive gain µ;
- a third multiplying means adapted to multiply the result of the third adding means by the result |y|² of the first multiplying means;
- a fourth adding means adapted to subtract B from the result A² of the second multiplying means, where B denotes the result of the third multiplying means;
- a means adapted to compute a square root for generating the square root of the result of the fourth adding means; and
- a fifth adding means adapted to subtract the result of said square-root-computing means from the result of the first adding means to generate the value of the gamma by γ(k) = a - √a² -b, where a = 1/µ + |γ(k)|² and b = |γ(k)|² (|x(k)|² + 2/µ)

2. The signal processing apparatus according to claim 1, **characterised in that** said means adapted to update said gain vector w comprises:
- a first multiplying means adapted to multiply said parameter gamma γ(k) by said adaptive gain µ;
- a first adding means adapted to subtract the result of the first multiplying means from 1;
- a first plurality of multiplying means adapted to multiply the present value of each element of said gain vector w by the result of the first adding means;
- a second multiplying means adapted to multiply the complex conjugate (y*) of said final array output y(t) by said adaptive gain µ;
- a third multiplying means adapted to multiply each element of said signal vector x(t) by the result of the second multiplying means; and
- a plurality of adding means adapted to add each output of said first plurality of multiplying means to the corresponding output of said second plurality of multiplying means to provide the final output of said gain vector updating means at each snapshot as$\text{w ← (1 - µγ)w + µ y* x.}$

3. The signal processing apparatus according to claim 2, **characterised in that** the means adapted to update said gain vector w further comprises:
- a plurality of multiplying means adapted to compute the squared value of the magnitude of each output of said plurality of adding means;
- an adding means adapted to add up all the outputs of said multiplying means;
- a means adapted to compute the square root of the result of said adding means; and
- a plurality of dividing means adapted to divide each output of said plurality of adding means by the result of said square-root computing means to generate a normalised value for the gain vector as w ←w /|w|.

4. A signal processing method adapted to minimise interference and to reduce effects of noise by controlling beam patterns of a telecommunication system having an array antenna, **characterised by** comprising the steps of:
- computing a parameter gamma γ(k) by utilising an adaptive gain µ, a signal vector x(t) and a final array output signal y(t) at a present snapshot; and
- updating a gain vector w by utilising said parameter gamma γ(k), the present value of said gain vector w, said adaptive gain µ, said signal vector x(t) and said final array output y(t),
where
- γ(k) is a coefficient for updating, at each snapshot k, a search directive vector v(k);
- µ is an adaptive coefficient for updating the gain vector w used for forming the desired beam pattern of an array antenna of a telecommunication system;
- y(t) is the final array output signal, computed as a result of the inner product of the signal vector x(t) and the gain vector w ;
- the gain vector w is updated based on the adaptive gain µ(k) and on the search directive vector v(k), where µ(k) and v(k) are the values of the adaptive gain µ, respectively, of the search directive vector v at the k-th snapshot;
further **characterised in that** the step of computing said parameter gamma γ(k) comprises the substeps of:
a1) computing the squared value of the magnitude of said final array output y(t);
a2) adding the reciprocal (1/µ) of said adaptive gain µ to the result of said substep a1;
a3) computing the squared value of the result (A) of said substep a2;
a4) computing the squared value of the magnitude of each element of said signal vector x(t);
a5) adding up all the results of said substep a4;
a6) adding the result of said substep a5 to the multiplication of the reciprocal of said adaptive gain µ by 2, i.e. to 2/µ ;
a7) multiplying the result of said substep a6 by the result the result |y|² of said substep a1;
a8) subtracting the result B of said substep a7 from the result A² of said substep a3;
a9) computing the square root of the result of said substep a8; and
a10) subtracting the result of said substep a9 from the result of said a2, and thus, the resultant value of said parameter gamma γ(k) is produced as γ(k) = A - √A²-B.

5. The signal processing method according to claim 4, **characterised in that** the step of updating said gain vector w comprises the substeps of:
b1 ) multiplying said parameter gamma γ(k) by said adaptive gain µ;
b2) subtracting the result of said substep b1 from 1;
b3) multiplying the present value of each element of said gain vector w by the result of said substep b2;
b4) multiplying the complex conjugate of the present value of said final array output y(t) by said adaptive gain µ;
b5) multiplying each element of said signal vector x(t) at the present snapshot by the result of said substep b4; and
b6) adding each result of said substep b3 to each result of said substep b5, and thus, said gain vector w is updated by w ← (1 - µγ) w + µ y* x.

6. The signal processing method according to claim 4, **characterised in that** the step of updating said gain vector w comprises the substeps of:
b1) multiplying said parameter gamma γ(k) by said adaptive gain µ;
b2) subtracting the result of said substep b1 from 1;
b3) multiplying the present value of each element of said gain vector w by the result of said substep b2;
b4) multiplying the complex conjugate of the present value of said final array output y(t) by said adaptive gain µ;
b5) multiplying each element of said signal vector x(t) at the present snapshot by the result of said substep b4;
b6) adding each result of said substep b3 to each result of said substep b5;
b7) computing the squared value of the magnitude of each output of said substep b6;
b8) adding up all the outputs of said squared values;
b9) computing the square root of the result of substep b2; and
b10) dividing each output of said substep b6 by the result of substep b9 to generate$\text{w←w/|w|.}$

7. The signal processing method according to claim 4, **characterised in that** said gain vector w is determined by a value of an eigenvector corresponding to the maximum eigenvalue of an autocorrelation matrix R of the signals received at each antenna element of said array antenna, the autocorrelation matrix R being a coefficient representing characteristics of the received signals.

8. The signal processing method according to claim 7, **characterised in that** said gain vector w is determined by multiplying a predetermined constant on each element of said eigenvector corresponding to said maximum eigenvalue of said autocorrelation matrix R, in order to modify said gain vector w without changing beam-pattern characteristics of said eigenvector of said maximum eigenvalue.

9. The signal processing method according to claim 7, **characterised in that** said gain vector w is determined by normalising said eigenvector corresponding to said maximum eigenvalue of said autocorrelation matrix R, such that a magnitude of the normalised eigenvector becomes 1 and a beam-pattern characteristic of said eigenvector of said maximum eigenvalue remains unchanged.

10. The signal processing method according to claim 7, **characterised in that** said autocorrelation matrix is computed by adding a first term and a second term, as shown in the equation given below, the first term being the autocorrelation matrix R at the last previous snapshot multiplied by a forgetting factor f and the second term being a signal matrix computed with said signal vector x(t) obtained from each antenna element of said array antenna at the present snapshot:${\text{R}}_{\text{x}} {\text{(J+1) = f*R}}_{\text{x}} {\text{(J) + x((J+1 )T}}_{\text{s}} {\text{) x}}^{\text{H}} {\text{((J+1)T}}_{\text{s}} \text{)}$ where Rₓ(J+1) and Rₓ(J) denote said correlation matrix at the J+1_st and J_th snapshots, respectively, f is said forgetting factor of which the magnitude lies between 0 and 1, Tₛ is a snapshot period and superscript H denotes a Hermitian operator.

11. The signal processing method according to claim 10, **characterised in that** said forgetting factor f in forming said autocorrelation matrix R is set to be 0 for simplifying the entire procedure.

12. The signal processing method according to claim 7, **characterised in that** said eigenvector corresponding to said maximum eigenvalue is computed by the procedure of:
- determining said gain vector w with a normalised value of the received signal vector x(0), wherein the phase of each element of said signal vector x(t) is modified in such a way that the resultant array output is synchronised to the phase of the signal received at a reference antenna element during the first snapshot; and
- updating said gain vector w of the last previous snapshot in such a way that a predetermined cost function, f(w) = w^{H} Rₓ w + γ (1 - w^{H} w), is maximised satisfying a constraint | w(k) |² = 1 at each snapshot, and that a gain value to be multiplied to said signal received at said reference antenna element at each snapshot is maintained to be a real quantity during the second snapshot and so on, wherein Rₓ is an autocorrelation matrix.

13. The signal processing method according to claim 12, **characterised in that** said reference antenna element is determined by an antenna element of which the phase of said signal is the latest of all said antenna elements in said array antenna at the present snapshot.

14. The signal processing method according to claim 12, **characterised in that** said reference antenna element is determined by said antenna element of which the physical distance from a signal source to be communicated with at the present snapshot is farthest compared to the other antenna elements in said array antenna.

15. A signal processing apparatus adapted to minimise interference and to reduce effects of noise by controlling beam patterns of a telecommunication system having an array antenna, **characterised by** comprising:
- a means adapted to generate an autocorrelation matrix R of received signals by utilising a signal vector x(t), each element of which is obtained from received signals at a corresponding antenna element, at every snapshot;
- a means adapted to compute a parameter gamma γ(k) by utilising an adaptive gain µ, a present value of a gain vector w and the autocorrelation matrix R, at each snapshot; and
- a means adapted to update said gain vector w by utilising said parameter gamma γ(k), the present value of said gain vector w, said adaptive gain µ and the autocorrelation matrix R
where
- the autocorrelation matrix R is a coefficient representing characteristics of the received signals at each snapshot;
- γ(k) is a coefficient for updating, at each snapshot k, a search directive vector v(k);
- µ is an adaptive coefficient for updating the gain vector w used for forming the desired beam pattern of an array antenna of a telecommunication system;
- y(t) is a final array output signal, computed as a result of the inner product of the signal vector x(t) and the gain vector w ;
- the gain vector w is updated based on the adaptive gain µ(k) and on the search directive vector v(k), where µ(k) and v(k) are the values of the adaptive gain µ, respectively, of the search directive vector v at the k-th snapshot;
further **characterised in that** said means adapted to computing said parameter gamma γ(k) comprises:
- a first multiplying means adapted to multiply each row of the autocorrelation matrix R by the present value of said search directive vector v to produce a vector E, i.e. E = R v;
- a second multiplying means adapted to multiply the complex conjugate of each element of the gain vector w by the corresponding element of E, i.e. λ = w^{H} E;
- a first computing means adapted to compute the L₂-norm of the vector E, i.e. F = E^{H} E;
- a third multiplying means adapted to multiply two-times of the reciprocal of the adaptive gain µ by λ, i.e. G = 2 λ/µ;
- a first adding means adapted to add the reciprocal of the adaptive gain µ to λ, i.e. A = 1/µ + λ;
- a second computing means adapted to compute the squared value of A, i.e., C = A²;
- a second adding means adapted to add the F to the G, i.e., B = F + G; and
- a third computing means adapted to compute the gamma γ by γ = A - √C - B.

16. The signal processing apparatus according to claim 15, **characterised in that** said gain vector w updating means comprise:
- a first multiplying means adapted to multiply the adaptive gain µ by said parameter gamma γ(k), i.e. ρ₁ = µγ,
- a subtracting means adapted to subtract the result of said first multiplying means from 1, i.e. ρ₂ = 1 - ρ₁;
- a means adapted to add the result of said subtracting means to the main diagonal elements of a matrix µR to produce a matrix Q, i.e., Q = ρ₂I + µR, where I denotes the identity matrix; and
- a second multiplying means adapted to multiply the matrix Q by the present value of the gain vector w to produce the updated gain vector w by w ← Q w.

17. The signal processing apparatus according to claim 14, **characterised in that** said gain vector w updating part comprises:
- a first multiplying means adapted to multiply the adaptive gain µ by said parameter gamma γ(k), i.e. ρ₁ = µγ;
- a subtracting means adapted to subtract the result of said first multiplying means from 1, i.e. ρ₂ = 1 - ρ₁;
- a means adapted to add the result of said subtracting means to the main diagonal elements of a matrix µR to produce resultant matrix Q, i.e., Q = ρ₂ I + µR,
where I denotes the identity matrix;
- a second multiplying means adapted to multiply the Q matrix by the present value of the gain vector w, i.e. D = Q w;
- a means adapted to compute the L₂- norm of the vector D, i.e., ρ₃ = Σᵢ|Dᵢ|²; and
- a means adapted to divide the vector D by ρ₃ to produce the updated gain vector w, i.e. w ← D/√ρ₃

18. A signal processing method for minimising interference and reducing effects of noise by controlling beam patterns of a telecommunication system having an array antenna, **characterised by** comprising the steps of:
- generating an autocorrelation matrix R of received signals by utilising a signal vector x(t), each element of which is obtained from received signals at a corresponding antenna element, at every snapshot;
- computing a parameter gamma γ(k) by utilising an adaptive gain µ, a present value of a gain vector w and said autocorrelation matrix R, at each snapshot; and
- updating said gain vector w by utilising said parameter gamma γ(k), the present value of said gain vector w, said adaptive gain µ and said autocorrelation matrix R;
where
- the autocorrelation matrix R is a coefficient representing characteristics of the received signals at each snapshot;
- γ(k) is a coefficient for updating, at each snapshot k, a search directive vector v(k);
- µ is an adaptive coefficient for updating the gain vector w used for forming the desired beam pattern of an array antenna of a telecommunication system;
- y(t) is a final array output signal, computed as a result of the inner product of the signal vector x(t) and the gain vector w ;
- the gain vector w is updated based on the adaptive gain µ(k) and on the search directive vector v(k), where µ(k) and v(k) are the values of the adaptive gain µ, respectively, of the search directive vector v at the k-th snapshot;
further **characterised in that** the step of computing said parameter gamma γ(k) comprises the substeps of:
b1) multiplying each row of the autocorrelation matrix R by the present value of said signal vector v to produce a vector E, i.e., E = R v;
b2) multiplying the complex conjugate of each element of the gain vector w by the corresponding element of E, i.e. λ = w^{H} E;
b3) computing the L₂-norm of the vector E, i.e., F = EH E;
b4) multiplying two-times of the reciprocal of the adaptive gain µ by λ, i.e. G = 2 λ/µ;
b5) adding the reciprocal of the adaptive gain µ to λ, i.e. A = 1/µ + λ;
b6) computing the squared value of A, i.e., C = A²;
b7) adding the F to the G, i.e., B = F + G; and
b8) computing the gamma by γ = A - √C - B .

19. The signal processing method according to claim 18, **characterised in that** the step of updating said gain vector w comprises the substeps of:
c1) multiplying the adaptive gain µ by said parameter gamma γ(k), i.e. ρ₁ = µγ;
c2) subtracting the result of said substep c1 from 1, i.e. ρ₂ = 1 - ρ₁;
c3) adding the result of said substep c2 to the main diagonal elements of a matrix µR to produce a matrix Q, i.e., Q = ρ₂ I + µR, where I denotes the identity matrix; and
c4) multiplying the matrix Q by the present value of the gain vector w, to produce the updated gain vector by w ← Q w.

20. The signal processing method according to claim 18, **characterised in that** the step of updating said gain vector w comprises the substeps of:
c1) multiplying the adaptive gain µ by said parameter gamma γ(k), i.e. ρ₁ = µγ;
c2) subtracting the result of said substep c1 from 1, i.e. ρ₂ = 1 - ρ₁;
c3) adding the result of said substep c2 to the main diagonal elements of a matrix µR to produce resultant matrix Q, i.e., Q = ρ₂ I + µR, where I denotes the identity matrix;
c4) multiplying the Q matrix by the present value of the gain vector w, i.e., D = Q w;
c5) computing the L₂- norm of the vector D, i.e., ρ₃ = Σᵢ |Dᵢ|²; and
c6) dividing the vector D by ρ₃ to produce the updated gain vector w, i.e. w ← D/√ρ₃.

21. The signal processing method according to claim 18, **characterised in that** said gain vector w is determined by a value of an eigenvector corresponding to the maximum eigenvalue of an autocorrelation matrix R of the signals received at each antenna element of said array antenna.

22. The signal processing method according to claim 21 **characterised in that** said gain vector w is determined by multiplying a predetermined constant to each element of said eigenvector corresponding to said maximum eigenvalue of said autocorrelation matrix R, in order to modify said gain vector w without changing beam-pattern characteristics of said eigenvector of said maximum eigenvalue.

23. The signal processing method according to claim 21, **characterised in that** said gain vector w is determined by normalising said eigenvector corresponding to said maximum eigenvalue of said autocorrelation matrix R, such that the magnitude of the normalised eigenvector becomes 1 and a beam-pattern characteristics of said eigenvector of said maximum eigenvalue remains unchanged.

24. The signal processing method according to claim 21, **characterised in that** an autocorrelation matrix computing part (20) computes the autocorrelation matrix R by adding a first term and a second term, as shown in the equation given below, the first term being the autocorrelation matrix R at the last previous snapshot multiplied by a forgetting factor f and the second term being a signal matrix computed with said signal vector x(t) obtained from each antenna element of said array antenna at the present snapshot:${\text{R}}_{\text{x}} {\text{(J+1) = f*R}}_{\text{x}} {\text{(J) + x((J+1)T}}_{\text{s}} {\text{) x}}^{\text{H}} {\text{((J+1)T}}_{\text{s}} \text{)}$ where Rₓ(J+1) and Rₓ(J) denote said autocorrelation matrix R at the J + 1_st and J_th snapshots, respectively, f is said forgetting factor of which the magnitude lies between 0 and 1, Tₛ is a snapshot period and superscript H denotes a Hermitian operator.

25. The signal processing method according to claim 21, **characterised in that** said eigenvector corresponding to said maximum eigenvalue is computed by the procedure of:
- determining said gain vector w with a normalised value of the received signal vector x(0), wherein the phase of each element of said signal vector x is modified in such a way that the resultant array output is synchronised to the phase of the signal received at said reference antenna element during the first snapshot; and
- updating said gain vector w of the last previous snapshot in such a way that a predetermined cost function, f(w) = w^{H} Rₓ w + γ(1 - w^{H} w), is maximised satisfying a constraint
|w (k)|² = 1 at each snapshot, and a gain value to be multiplied to said signal received at said reference antenna element at each snapshot is maintained to be a real quantity during the second snapshot and so on, wherein Rₓ is an autocorrelation matrix.

26. The signal processing method according to claim 25, **characterised in that** said reference antenna element is determined by an antenna element of which the phase of said signal is the latest of all said antenna elements in said array antenna at the present snapshot.

27. The signal processing method according to claim 25, **characterised in that** said reference antenna element is determined by said antenna element of which the physical distance from a signal source to be communicated with at the present snapshot is farthest compared to the other antenna elements in said array antenna.

## Patentansprüche

1. Eine Signalverarbeitungsvorrichtung, die zur Minimierung von Interferenzen und Reduzierung von Rauscheffekten durch Steuerung der Strahlungsdiagramme eines Telekommunikationssystems mit Gruppenantenne. Zu der Vorrichtung gehören:
- eine Komponente zur Berechnung eines Parameters gamma γ(k) mittels einer vorab festgelegten adaptiven Verstärkung µ, eines Signalvektors x(t), dessen Elemente jeweils aus dem Empfangssignal eines entsprechenden Antennenelements gewonnen werden, und eines Endsignals y(t) des Antennenausgangs, das einer aktuellen Momentaufnahme entspricht; und
- einer Komponente zur Aktualisierung eines Verstärkungsvektors w mittels des Parameters gamma γ(k), des aktuellen Werts des Verstärkungsvektors w, der adaptiven Verstärkung µ, des Signalvektors x(t) und dem Endsignal y(t) des Antennenausgangs;
wobei
- γ(k) ein Koeffizient zur Aktualisierung eines Richtungssuchvektors v(k) zu jeder Momentaufnahme ist;
- µ ein adaptiver Koeffizient zur Aktualisierung des Verstärkungsvektors w ist, der dazu dient, das gewünschte Strahlungsdiagramm der Gruppenantenne eines Telekommunikationssystems zu formen;
- y(t) das Endsignal des Antennenausgangs ist, das durch das innere Produkt des Signalvektors x(t) und des Verstärkungsvektors w gegeben ist;
- die Aktualisierung des Verstärkungsvektors w auf der Basis der adaptiven Verstärkung µ(k) und des Richtungssuchvektors v(k) erfolgt, wobei µ(k) und v(k) die Werte der adaptiven Verstärkung µ bzw. des Richtungssuchvektors v zur k-ten Momentaufnahme sind;
weiter ist die Vorrichtung **dadurch gekennzeichnet, dass** zu der Komponente zur Berechnung des Parameters gamma γ(k) die folgenden Komponenten gehören:
- ein erster Multiplizierer, der das Betragsquadrat des Endsignals y(t) des Antennenausgangs berechnet;
- ein erster Addierer, der das Ergebnis des ersten Multiplizierers zum Kehrwert (1/µ) der adaptiven Verstärkung µ addiert;
- ein zweiter Multiplizierer, der das Quadrat von A berechnet, wobei A das Ergebnis des ersten Addierers ist;
- eine Gruppe von Multiplizierem, die die Quadrate aller Elemente des Signalvektors x berechnen;
- ein zweiter Addierer, der sämtliche Ergebnisse der Gruppe von Multiplizierern addiert;
- ein dritter Addierer, der das Ergebnis des zweiten Addierers zum Zweifachen des Kehrwerts (1/µ) der adaptiven Verstärkung µ addiert;
- ein dritter Multiplizierer, der das Ergebnis des dritten Addieres mit dem Ergebnis |y|² des ersten Multiplizierers multipliziert;
- ein vierter Addierer, der B vom Ergebnis A² des zweiten Multiplizierers subtrahiert,
wobei B das Ergebnis des dritten Multiplizierers ist;
- ein Radizierer, der die Quadratwurzel des Ergebnisses des vierten Addierers berechnet;
- ein fünfter Addierer, der das Ergebnis des Radizierers vom Ergebnis des ersten Addierers subtrahiert, um den Wert gamma entsprechend γ(k) = a - √a²-b zu erzeugen,
wobei a = 1/µ + |γ(k)|² und b = |γ(k)|²(|x(k)|² + 2/µ)

2. Die Signalverarbeitungsvorrichtung entsprechend Anspruch 1 **gekennzeichnet dadurch, dass** zu der Komponente zur Aktualisierung des Verstärkungsvektors w die folgenden Komponenten gehören:
- ein erster Multiplizierer, der den Parameter gamma γ(k) mit der adaptiven Verstärkung µ multipliziert;
- ein erster Addierer, der das Ergebnis des ersten Multiplizierers von 1 subtrahiert;
- eine erste Gruppe von Multiplizierem, die den aktuellen Wert jedes Elements des Verstärkungsvektors w mit dem Ergebnis des ersten Addierers multipliziert;
- ein zweiter Multiplizierer, der den konjugiert-komplexen Wert (y*) des Endsignals y(t) des Antennenausgangs mit der adaptiven Verstärkung µ multipliziert;
ein dritter Multiplizierer, der jedes Element des Signalvektors x(t) mit dem Ergebnis des zweiten Multiplizierers multipliziert; und
- eine Gruppe von Addierem, die die einzelnen Ergebnisse der ersten Gruppe von Multiplizierern zu den entsprechenden Ergebnissen des zweiten Multiplizierers addiert, um zu jeder Momentaufnahme das endgültige Ausgangssignal der Komponente zur Aktualisierung des Verstärkungsvektors zu liefern in der Form$\text{w ← (1 - µγ)w + µy*x.}$

3. Die Signalverarbeitungsvorrichtung entsprechend Anspruch 2 **gekennzeichnet dadurch, dass** zu der Komponente zur Aktualisierung des Verstärkungsvektors w zusätzlich die folgenden Komponenten gehören:
- eine Gruppe von Multiplizierem, die die Betragsquadrate aller Ausgangswerte der Gruppe von Addierem berechnen;
- ein Addierer, der sämtliche Ausgangssignale der Gruppe von Multiplizierem addiert;
- ein Radizierer, der die Quadratwurzel des Ergebnisses des Addierers berechnet;
- eine Gruppe von Dividierern, die die einzelnen Ausgangssignale der Gruppe von Addierem durch das Ergebnis des Radizierers dividieren, um einen normierten Wert des Verstärkungsvektors in der Form w ← w/|w| zu erzeugen.

4. Ein Signalverarbeitungsverfahren zur Minimierung von Interferenzen und zur Reduktion von Rauscheffekten, das auf der Steuerung des Strahlungsdiagramms eines Telekommunikationssystems mit Gruppenantenne basiert und **dadurch gekennzeichnet ist, dass** es die folgenden Schritte umfasst:
- Berechnung eines Parameters gamma γ(k) mittels einer adaptiven Verstärkung µ, eines Signalvektors x(t) und eines Endsignals y(t) des Antennenausgangs entsprechend einer aktuellen Momentaufnahme; und
- Aktualisierung eines Verstärkungsvektors w mittels des Parameters gamma γ(k), des aktuellen Werts des Verstärkungsvektors w, der adaptiven Verstärkung µ, des Signalvektors x(t) und des Endsignals y(t) des Antennenausgangs,
wobei
- γ(k) ein Koeffizient zur Aktualisierung eines Richtungssuchvektors v(k) zu jeder Momentaufnahme ist;
- µ ein adaptiver Koeffizient zur Aktualisierung des Verstärkungsvektors w ist, der dazu dient, das gewünschte Strahlungsdiagramm der Gruppenantenne eines Telekommunikationssystems zu formen;
- y(t) das Endsignal des Antennenausgangs ist, das durch das innere Produkt des Signalvektors x(t) und des Verstärkungsvektors w gegeben ist;
- die Aktualisierung des Verstärkungsvektors w auf der Basis der adaptiven Verstärkung µ(k) und des Richtungssuchvektors v(k) erfolgt, wobei µ(k) und v(k) die Werte der adaptiven Verstärkung µ bzw. des Richtungssuchvektors v entsprechend der k-ten Momentaufnahme sind;
weiter ist das Verfahren **dadurch gekennzeichnet, dass** das der Schritt, in dem der Parameter gamma γ(k) berechnet wird, die folgenden Teilschritte umfasst:
a1) Berechnung des Betragsquadrats des Endsignals y(t) des Antennenausgangs;
a2) Addition des Kehrwerts (1/µ) der adaptiven Verstärkung µ zum Ergebnis aus Teilschritt a1;
a3) Berechnung des Quadrats des Ergebnisses (A) aus Teilschritt a2;
a4) Berechnung des Betragsquadrats eines jeden Elements des Signalvektors x(t);
a5) Addition aller Ergebnisse aus Teilschritt a4;
a6) Addition des Ergebnisses aus Teilschritt a5 zum Produkt aus dem Kehrwert der adaptiven Verstärkung µ und 2, d.h. zu 2/µ;
a7) Multiplikation des Ergebnisses aus Teilschritt a6 mit dem Ergebnis |y|² aus Teilschritt a1;
a8) Subtraktion des Ergebnisses B aus Teilschritt a7 vom Ergebnis A² aus Teilschritt a3;
a9) Berechnung der Quadratwurzel des Ergebnisses aus Teilschritt a8; und
a10) Subtraktion des Ergebnisses aus Teilschritt a9 vom Ergebnis aus Teilschritt a2, so dass sich für den Parameter gamma γ(k) = A - √A²-B ergibt.

5. Das Signalverarbeitungsverfahren entsprechend Anspruch 4 **gekennzeichnet dadurch, dass** der Schritt, in dem der Verstärkungsvektor w aktualisiert wird, die folgenden Teilschritte umfasst:
b1) Multiplikation des Parameters gamma γ(k) mit der adaptiven Verstärkung µ;
b2) Subtraktion des Ergebnisses aus Teilschritt b1 von 1;
b3) Multiplikation des aktuellen Werts eines jeden Elements des Verstärkungsvektors w mit dem Ergebnis aus Teilschritt b2;
b4) Multiplikation des konjugiert-komplexen Wertes des aktuellen Endsignals y(t) des Antennenausgangs mit der adaptiven Verstärkung µ;
b5) Multiplikation eines jeden Elements des Signalvektors x(t) entsprechend der aktuellen Momentaufnahme mit dem Ergebnis aus Teilschritt b4; und
b6) Addition eines jeden Ergebnisses aus Teilschritt b3 zu den entsprechenden Ergebnissen aus Teilschritt b5, so dass der Verstärkungsvektor entsprechend w ← (1-µγ)w + µy*x aktualisiert wird.

6. Das Signalverarbeitungsverfahren entsprechend Anspruch 4 **gekennzeichnet dadurch, dass** der Schritt, in dem Verstärkungsvektor w aktualisiert wird, die folgenden Teilschritte umfasst:
b1) Multiplikation des Parameters gamma γ(k) mit der adaptiven Verstärkung µ;
b2) Subtraktion des Ergebnisses aus Teilschritt b1 von 1;
b3) Multiplikation des aktuellen Werts eines jeden Elements des Verstärkungsvektors w mit dem Ergebnis aus Teilschritt b2;
b4) Multiplikation des konjugiert-komplexen Wertes des aktuellen Endsignals y(t) des Antennenausgangs mit der adaptiven Verstärkung µ;
b5) Multiplikation eines jeden Elements des Signalvektors x(t) entsprechend der aktuellen Momentaufnahme mit dem Ergebnis aus Teilschritt b4; und
b6) Addition eines jeden Ergebnisses aus Teilschritt b3 zu den entsprechenden Ergebnissen aus Teilschritt b5;
b7) Berechnung des Betragsquadrats eines jeden Ergebnisses aus Teilschritt b6;
b8) Addition sämtlicher Betragsquadrate aus Teilschritt b7;
b9) Berechnung der Quadratwurzel des Ergebnisses aus Teilschritt b2; und
b10) Division eines jeden der Ergebnisse aus Teilschritt b6 durch das Ergebnis aus Teilschritt b9 zur Erzeugung von w ← w / |w|.

7. Das Signalverarbeitungsverfahren entsprechend Anspruch 4 **gekennzeichnet dadurch, dass** der Verstärkungsvektor w durch einen Wert eines Eigenvektors bestimmt wird, der dem maximalen Eigenwert einer Autokorrelationsmatrix R er Signale entspricht, die an jedem der Antennenelemente der Gruppenantenne empfangen werden, wobei die Autokorrelationsmatrix R eine Koeffizientendarstellung der Charakteristik der Empfangssignale ist.

8. Das Signalverarbeitungsverfahren entsprechend Anspruch 7 **gekennzeichnet dadurch**, das der Verstärkungsvektor w bestimmt wird, indem eine vorab bestimmte Konstante mit jedem Element des Eigenvektors, der dem maximalen Eigenwert der Autokorrelationsmatrix R entspricht, multipliziert wird, so dass der Verstärkungsvektor w modifiziert wird, ohne dass sich die Charakteristik des Strahlungsdiagramms des Eigenvektors zum maximalen Eigenwert ändert.

9. Das Signalverarbeitungsverfahren entsprechend Anspruch 7 **gekennzeichnet dadurch, dass** der Verstärkungsvektor w bestimmt wird, indem der Eigenvektor zum maximalen Eigenwert der Autokorrelationsmatrix R so normiert wird, dass sein Betrag 1 ist und eine Charakteristik des Strahlungsdiagramms des Eigenvektors zum maximalen Eigenwert unverändert bleibt.

10. Das Signalverarbeitungsverfahren entsprechend Anspruch 7 **gekennzeichnet dadurch, dass** die Autokorrelationsmatrix berechnet wind, indem, wie in der unten angeführten Gleichung gezeigt, ein erster und ein zweiter Term addiert werden, wobei der erste Term die die mit einem Vergessensfaktor f multiplizierte Autokorrelationsmatrix R zur unmittelbar vorhergehenden Momentaufnahme ist und der zweite Term eine Signalmatrix ist, die aus dem Signalvektor x(t), der zur aktuellen Momentaufnahme von jedem Antennenelement erhalten wird, berechnet wird:${\text{R}}_{\text{x}} {\text{(J+1) = f*R}}_{\text{x}} {\text{(J) + x((J+1)T}}_{\text{s}} {\text{)x}}^{\text{H}} {\text{((J+1)T}}_{\text{s}} \text{),}$ wobei Rₓ(J+1) und Rₓ(J) die Korrelationsmatrix zur J+1-sten bzw. zur J-ten Momentaufnahme bezeichnen, f der Vergessensfaktor ist, dessen Betrag zwischen 0 und 1 liegt, Tₛ eine Periode zwischen zwei Momentaufnahmen ist und der obere Index H einen hermiteschen Operator bezeichnet.

11. Das Signalverarbeitungsverfahren entsprechend Anspruch 10 **gekennzeichnet dadurch, dass** der Vergessensfaktor f zur Bildung der Autokorrelationsmatrix R zur Vereinfachung des gesamten Verfahrens 0 gesetzt wird.

12. Das Signalverarbeitungsverfahren entsprechend Anspruch 7 **gekennzeichnet dadurch, dass** der Eigenvektor zum maximalen Eigenwert auf die folgende Weise berechnet wird:
- Bestimmung des Verstärkungsvektors w mit einem normierten Wert des Signalvektors x(0), wobei die Phase eines jeden Elements des Vektors x(t) so modifiziert wird, dass das sich ergebende Ausgangssignal der Antenne synchronisiert ist mit der Phase des an einem Referenzantennenelement empfangenen Signals während der ersten Momentaufnahme ist; und
- Aktualisierung des Verstärkungsvektors w zur unmittelbar vorangehenden Momentaufnahme, so dass eine vorab bestimmte Kostenfunktion, f(w) = w^{H}Rₓw + γ(1-w^{H}w), unter Erfüllung der Bedingung |w(k)|² = 1 zu jeder Momentaufnahme maximiert wird und dass weiter der Verstärkungswert, der zu jeder Momentaufnahme mit dem am Referenzantennenelement empfangene Signal multipliziert wird, während der zweiten Momentaufnahme eine reelle Größe bleibt und so weiter, und wobei Rₓ eine Autokorrelationsmatrix ist.

13. Das Signalverarbeitungsverfahren entsprechend Anspruch 12 **gekennzeichnet dadurch, dass** das Referenzantennenelement dadurch bestimmt wird, dass bei ihm die Phase des betreffenden Signals unter allen Antennenelementen der Gruppenantenne zur aktuellen Momentaufnahme die größte Verzögerung hat.

14. Das Signalverarbeitungsverfahren entsprechend Anspruch 12 **gekennzeichnet dadurch, dass** das Referenzantennenelement dadurch bestimmt wird, dass sein physikalischer Abstand von einer Signalquelle, mit der kommuniziert werden soll, zur aktuellen Momentaufnahme im Vergleich zu den anderen Antennenelementen der Gruppenantenne am größten ist.

15. Eine Signalverarbeitungsvorrichtung zur Minimierung von Interferenzen und zur Reduzierung von Rauscheffekten durch Regelung des Strahlungsdiagramms eines Telekommunikationssystems mit einer Gruppenantenne **gekennzeichnet dadurch, dass** zu ihr die folgenden Komponenten gehören:
- eine Komponente zur Erzeugung einer Autokorrelationsmatrix R der Empfangssignale zu jeder Momentaufnahme unter Verwendung eines Signalvektors x(t), dessen einzelnen Elemente aus den Empfangssignalen am jeweiligen Antennenelement erhalten werden;
- eine Komponente zur Berechnung eines Parameters gamma γ(k) mittels einer adaptiven Verstärkung µ, des aktuellen Werts eines Verstärkungsvektors w und der Autokorrelationsmatrix R zu jeder Momentaufnahme; und
- eine Komponente zur Aktualisierung des Verstärkungsvektors w unter Verwendung des Parameters gamma γ(k), des aktuellen Werts des Verstärkungsvektors w, der adaptiven Verstärkung µ und der Autokorrelationsmatrix R,
wobei
- die Autokorrelationsmatrix R eine Koeffizientendarstellung der Charakteristik der empfangenen Signals zu jeder Momentaufnahme ist;
- γ(k) ein Koeffizient zur Aktualisierung eines Richtungssuchvektors v(k) zu jeder Momentaufnahme k ist;
- µ ein adaptiver Koeffizient zur Aktualisierung des Verstärkungsvektors w ist zur Formung des gewünschten Strahlungsdiagramms der Gruppenantenne eines Telekommunikationssystems;
- y(t) ein Endsignal des Antennenausgangs ist, berechnet als das innere Produkt des Signalvektors x(t) mit dem Verstärkungsvektor w;
- der Verstärkungsvektor w auf der Grundlage der adaptiven Verstärkung µ(k) und des Richtungssuchvektors v(k) aktualisiert wird, wobei µ(k) und v(k) die Werte der adaptiven Verstärkung µ bzw. des Richtungssuchvektors v zur k-ten Momentaufnahme sind;
weiter ist die Vorrichtung **dadurch gekennzeichnet, dass** zu der Komponente zur Berechnung des Parameters gamma γ(k) folgende Komponenten gehören:
- ein erster Multiplizierer, der jede Zeile der Autokorrelationsmatrix R mit dem aktuellen Wert des Richtungssuchvektors v multipliziert, so dass sich der Vektor E ergibt, d.h. E = Rv;
- ein zweiter Multiplizierer, der den konjugiert-komplexen Wert eines jeden Elements des Verstärkungsvektors w mit dem entsprechenden Element von E multipliziert, d.h. λ = w^{H}E;
- ein erstes Rechenglied, das die L₂-Norm des Vektors E berechnet, d.h. F = E^{H}E;
- ein dritter Multiplizierer, der den doppelten Kehrwert der adaptiven Verstärkung µ mit λ multipliziert, d.h. G = 2λ/µ;
- ein erster Addierer der den Kehrwert der adaptiven Verstärkung µ zu λ addiert, d.h. A = 1/µ + λ;
- ein zweites Rechenglied, das das Quadrat von A berechnet, d.h. C = A²;
ein zweiter Addierer, der F zu G addiert, d.h. B = F+G; und
- ein drittes Rechenglied, das gamma γ gemäß γ = A + √C-B berechnet.

16. Die Signalverarbeitungsvorrichtung entsprechend Anspruch 15 **gekennzeichnet dadurch, dass** zu der Komponente zur Aktuälisierung des Verstärkungsvektors w die folgenden Komponenten gehören:
- ein erster Multiplizierer, der die adaptive Verstärkung µ mit dem Parameter gamma γ(k) multipliziert, d.h. ρ₁ = µγ;
ein Subtrahierer, der das Ergebnis des ersten Multiplizierers von 1 subtrahiert, d.h. ρ₂ = 1 -ρ₁;
- ein Glied, das das Ergebnis des Subtrahierers zu den Elementen der Hauptdiagonale einer Matrix µR addiert, so dass sich eine Matrix Q ergibt, d.h. Q = ρ₂I + µR, wobei I die Einheitsmatrix bezeichnet; und
- ein zweiter Multiplizierer, der die Matrix Q mit dem aktuellen Wert des Verstärkungsvektors w multipliziert, so dass sich der aktualisierte Verstärkungsvektor w gemäß w ← Qw ergibt.

17. Die Signalverarbeitungsvorrichtung entsprechend Anspruch 14 **gekennzeichnet dadurch, dass** zu der Komponente zur Aktualisierung des Verstärkungsvektors w die folgenden Komponenten gehören:
- ein erster Multiplizierer, der die adaptive Verstärkung µ mit dem Parameter gamma γ(k) multipliziert, d.h. ρ₁ = µγ;
ein Subtrahierer, der das Ergebnis des ersten Multiplizierers von 1 subtrahiert, d.h. ρ₂ = 1 - ρ₁;
- ein Glied, das das Ergebnis des Subtrahierers zu den Elementen der Hauptdiagonale einer Matrix µR addiert, so dass sich eine Matrix Q ergibt, d.h. Q = ρ₂I + µR, wobei I die Einheitsmatrix bezeichnet;
- ein zweiter Multiplizierer, der die Matrix Q mit dem aktuellen Wert des Verstärkungsvektors w multipliziert, d.h. D = Qw;
- ein Rechenglied, das die L₂-Norm des Vektors D berechnet, d.h. ρ₃ = Σᵢ|Dᵢ|²; und
- ein Dividierer, der den Vektor D durch ρ₃ dividiert, so dass sich der aktualisierte Verstärkungsvektor w ergibt, d.h. w ← D/√ ρ₃.

18. Ein Signalverarbeitungsverfahren zur Minimierung von Interferenzen und Reduktion von Rauscheffekten durch Steuerung der Strahlungsdiagramme eines Telekommunikationssystems mit Gruppenantenne **dadurch gekennzeichnet, dass** es die folgenden Schritte umfasst:
- Erzeugung einer Autokorrelationsmatrix R der Empfangssignale, wobei zu jeder Momentaufnahme ein Signalvektor x(t), dessen einzelnen Elemente aus den Empfangssignalen an den entsprechenden Antennenelementen gewonnen werden, zugrunde gelegt wird;
- Berechnung eines Parameters gamma γ(k) unter Verwendung einer adaptiven Verstärkung µ, des aktuellen Werts eines Verstärkungsvektors w und der Autokorrelationsmatrix R zu jeder Momentaufnahme; und
- Aktualisierung des Verstärkungsvektors w unter Verwendung des Parameters gamma γ(k), des aktuellen Werts des Verstärkungsvektors w, der adaptiven Verstärkung µ und der Autokorrelationsmatrix R;
wobei
- die Autokorrelationsmatrix R eine Koeffizientendarstellung der Charakteristik der empfangenen Signale zu jeder Momentaufnahme ist;
- γ(k) ein Koeffizient zur Aktualisierung eines Richtungssuchvektors v(k) zu jeder Momentaufnahme k ist;
- µ ein adaptiver Koeffizient zur Aktualisierung des Verstärkungsvektors w ist, mittels dessen das gewünschte Strahlungsdiagramm der Gruppenantenne eines Telekommunikationssystems geformt wird;
- y(t) ein Endsignal des Antennenausgangs ist, das als inneres Produkt des Signalvektors x(t) mit dem Verstärkungsvektor w erhalten wird;
- der Verstärkungsvektor w unter Zugrundelegung der adaptiven Verstärkung µ(k) und des Richtungssuchvektors v(k) aktualisiert wird, wobei µ(k) und v(k) die Werte der adaptiven Verstärkung µ bzw. des Richtungssuchvektors v zur k-ten Momentaufnahme sind;
weiter ist das Verfahren **dadurch gekennzeichnet**, das der Schritt, in dem der Parameter gamma γ(k) aktualisiert wird, die folgenden Teilschritte umfasst:
b1) Erzeugung eines Vektors E durch Multiplikation einer jeden Zeile der Autokorrelationsmatrix R mit dem aktuellen Wert des Richtungssuchvektors v, d.h. E = Rv;
b2) Multiplikation des konjugiert-komplexen Werts eines jeden Elements des Verstärkungsvektors w mit dem entsprechenden Element von E, d.h. λ = w^{H}E;
b3) Berechnung der L₂-Norm des Vektors E, d.h. F = E^{H}E;
b4) Multiplikation des doppelten Kehrwerts der adaptiven Verstärkung µ mit λ, d.h. G = 2λ/µ;
b5) Addition des Kehrwerts der adaptiven Verstärkung µ zu λ, d.h. A = 1/µ + λ;
b6) Berechnung des Quadrats von A, d.h. C = A²;
b7) Addition von F zu G, d.h. B = F+G; and
b8) Berechung von gamma gemäß γ = A - √C-B.

19. Das Signalverarbeitungsverfahren entsprechend Anspruch 18 **gekennzeichnet dadurch, dass** der Schritt, in dem der Verstärkungsfaktor w aktualisiert wird, die folgenden Teilschritte umfasst:
c1) Multiplikation der adaptiven Verstärkung µ mit dem Parameter gamma γ(k), d.h. ρ₁ *=* µγ,
c2) Subtraktion des Ergebnisses aus Teilschritt c1 von 1, d.h. ρ₂ = 1 - ρ₁;
c3) Erzeugung einer Matrix Q durch Addition des Ergebnisses aus Teilschritt c2 zu den Elementen der Hauptdiagonale einer Matrix µR, d.h. Q = ρ₂I + µR, wobei I die Einheitsmatrix bezeichnet;
und
c4) Multiplikation der Matrix Q mit dem aktuellen Wert des Verstärkungsvektors w zur Erzeugung des aktualisierten Verstärkungsvektors gemäß w ← Qw.

20. Das Signalverarbeitungsverfahren entsprechend Anspruch 18 **gekennzeichnet dadurch, dass** der Schritt, in dem der Verstärkungsvektor w aktualisiert wird, die folgenden Teilschritte umfasst:
c1) Multiplikation der adaptiven Verstärkung µ mit dem Parameter gamma γ(k), d.h. ρ₁
c2) Subtraktion des Ergebnisses aus Teilschritt c1 von 1, d.h. ρ₂ = 1 - ρ₁;
c3) Erzeugung einer Matrix Q durch Addition des Ergebnisses aus Teilschritt c2 zu den Elementen der Hauptdiagonale einer Matrix µR, d.h. Q = ρ₂I + µR, wobei I die Einheitsmatrix bedeutet;
c4) Multiplikation der Matrix Q mit dem aktuellen Wert des Verstärkungsvektors w, d.h. D = Qw;
c5) Berechnung der L₂-Norm des Vektors D, d.h. ρ₃ = Σᵢ|Dᵢ|²; und
c6) Division des Vektors D durch ρ₃ zur Erzeugung des aktualisierten Verstärkungsvektors w, d.h. w ← D/√ ρ₃.

21. Das Signalverarbeitungsverfahren entsprechend Anspruch 18 **gekennzeichnet dadurch**, das der Verstärkungsvektor w durch einen Wert eines Eigenvektors zum maximalen Eigenwert einer Autokorrelationsmatrix R der an sämtlichen Antennenelementen der Gruppenantenne empfangenen Signale bestimmt wird;

22. Das Signalverarbeitungsverfahren entsprechend Anspruch 21 **gekennzeichnet dadurch, dass** der Verstärkungsvektor w dadurch bestimmt wird, dass eine vorab bestimmte Konstante mit jedem Element des besagten Einheitsvektors zum maximalen Eigenwert der Autokorrelationsmatrix bestimmt wird, um den Verstärkungsvektor w zu modifizieren, ohne dass dabei die Charakteristik des Strahlungsdiagramms, das dem Eigenvektor zum maximalen Eigenwert entspricht, geändert wird.

23. Das Signalverarbeitungsverfahren entsprechend Anspruch 21 **gekennzeichnet dadurch, dass** der Verstärkungsvektor w durch Normierung des besagten Eigenvektors zum maximalen Eigenwert der Autokorrelationsmatrix R bestimmt wird, so dass der Betrag des normierten Eigenvektors 1 wird und die Charakteristik des Strahlungsdiagramms, das dem Eigenvektor zum maximalen Eigenwert entspricht, ungeändert bleibt.

24. Das Signalverarbeitungsverfahren entsprechend Anspruch 21 **gekennzeichnet dadurch, dass** in einem Teil (20) die Autokorrelationsmatrix R dadurch berechnet wird, dass ein erster und ein zweiter Term entsprechend der unten angeführten Gleichung addiert werden, wobei der erste Term die Autokorrelationsmatrix zur unmittelbar vorhergehenden Momentaufnahme ist multipliziert mit einem Vergessensfaktor f und der zweite Term eine Signalmatrix ist, die aus dem von sämtlichen Antennenelementen der Gruppenantenne gewonnenen Signalvektor zur aktuellen Momentaufnahme berechnet wird:${\text{R}}_{\text{x}} {\text{(J+1) = f*R}}_{\text{x}} {\text{(J) + x((J+1)T}}_{\text{s}} {\text{)x}}^{\text{H}} {\text{((J+1)T}}_{\text{s}} \text{),}$ wobei mit Rₓ(J+1) und Rₓ(J) die Autokorrelationsmatrix zur J+1-sten bzw. zur J-ten Momentaufnahme bezeichnet wird, f der Vergessensfaktor ist, dessen Betrag zwischen 0 und 1 liegt, Tₛ eine Periode zwischen zwei Momentaufnahmen ist und der obere Index H einen hermiteschen Operator bezeichnet.

25. Das Signalverarbeitungsverfahren entsprechend Anspruch 21 **gekennzeichnet dadurch, dass** der besagte Eigenvektor zum maximalen Eigenwert mittels des folgenden Verfahrens berechnet wird:
- Aktualisierung des Verstärkungsvektors w zur unmittelbar vorhergehenden Momentaufnahme erfolgt derart, dass eine vorab bestimmte Kostenfunktion, f(w) = w^{H}Rₓw + γ(1-w^{H}w), unter Erfüllung der Bedingung |w(k)|² = 1 maximiert wird und dass weiter ein Verstärkungswert, mit dem das Signal am Referenzantennenelement zu jeder Momentaufnahme multipliziert wird, während der zweiten Momentaufnahme reell bleibt und so weiter, wobei Rₓ eine Autokorrelationsmatrix ist.

26. Das Signalverarbeitungsverfahren entsprechend Anspruch 25 **gekennzeichnet dadurch, dass** als Referenzantennenelement ein solches Antennenelement bestimmt wird, bei dem die Phase des Signals unter allen Antennenelementen der Gruppenantenne zur aktuellen Momentaufnahme die größte Verzögerung aufweist.

27. Das Signalverarbeitungsverfahren entsprechend Anspruch 25 **gekennzeichnet dadurch, dass** als Referenzantennenelement ein solches Antennenelement bestimmt wird, dessen physikalischer Abstand von einer Signalquelle, mit der kommuniziert werden soll, zur aktuellen Momentaufnahme verglichen mit den anderen Antennenelementen der Gruppenantenne am größten ist.

## Revendications

1. Appareil de traitement de signal adapté pour minimiser les interférences et réduire les effets de bruit en contrôlant les diagrammes de faisceau d'un système de télécommunications ayant une antenne en réseau, **caractérisé en ce qu'**il comprend :
- un moyen adapté pour calculer un paramètre gamma γ(k), en utilisant un gain adaptatif prédéterminé µ, un vecteur de signal x(t), chacun d'entre eux étant obtenu à partir de signaux reçus à un élément d'antenne correspondant, et un signal de sortie de réseau final y(t) à un moment moment instantané actuel ; et
- un moyen adapté pour mettre à jour un vecteur de gain w en utilisant ledit paramètre gamma γ(k), la valeur actuelle dudit vecteur de gain w, ledit gain adaptatif µ, ledit vecteur de signal x(t) et ladite sortie de réseau finale y(t) ;
dans lequel
- γ(k) est un coefficient pour mettre à jour, à chaque moment instantané k, un vecteur directeur de recherche v(k) ;
- µ est un coefficient adaptatif pour mettre à jour le vecteur de gain w utilisé pour former le diagramme de faisceau souhaité d'une antenne en réseau d'un système de télécommunications ;
- y(t) est le signal de sortie de réseau final, calculé en tant que résultat du produit interne du vecteur de signal x(t) et du vecteur de gain w ;
- le vecteur de gain w est mis à jour sur la base du gain adaptatif µ(k) et du vecteur directeur de recherche v(k), où µ(k) et v(k) sont les valeurs du gain adaptatif µ, respectivement, du vecteur directeur de recherche v au k^{ème} moment instantané ;
**caractérisé en outre en ce que** ledit moyen adapté pour calculer ledit paramètre gamma γ(k) comprend :
- un premier moyen de multiplication adapté pour calculer le carré de l'amplitude de la sortie de réseau finale y(t) ;
- un premier moyen d'addition adapté pour ajouter le résultat du premier moyen de multiplication à l'inverse (1/µ) dudit gain adaptatif µ ;
- un deuxième moyen de multiplication adapté pour calculer le carré de A, où A désigne le résultat du premier moyen d'addition ;
- une pluralité de moyens de multiplication adaptés pour calculer le carré de l'amplitude de chaque élément dudit vecteur de signal x ;
- un deuxième moyen d'addition adapté pour additionner tous les résultats de ladite pluralité de moyens de multiplication ;
- un troisième moyen d'addition adapté pour additionner le résultat du deuxième moyen d'addition à deux fois l'inverse (1/µ) dudit gain adaptatif µ ;
- un troisième moyen de multiplication pour multiplier le résultat du troisième moyen d'addition par le résultat |y|² du premier moyen de multiplication ;
- un quatrième moyen d'addition adapté pour soustraire B au résultat A² du deuxième moyen de multiplication, où B désigne le résultat du troisième moyen de multiplication ;
- un moyen adapté pour calculer une racine carrée pour générer la racine carrée du résultat du quatrième moyen d'addition ; et
- un cinquième moyen d'addition adapté pour soustraire le résultat dudit moyen de calcul de racine carrée au résultat du premier moyen d'addition pour générer la valeur de gamma selon γ(k) = a - $\sqrt{{\text{a}}^{\text{2}}}$ - b, où a = 1/µ + |γ(k)|² et b = |γ(k)|²(|x(k)|² + 2/µ).

2. Appareil de traitement de signal selon la revendication 1, **caractérisé en ce que** ledit moyen adapté pour mettre à jour ledit vecteur de gain w comprend :
- un premier moyen de multiplication adapté pour multiplier ledit paramètre gamma γ(k) par ledit gain adaptatif µ ;
- un premier moyen d'addition adapté pour soustraire de 1 le résultat du premier moyen de multiplication ;
- une première pluralité de moyens de multiplication adaptés pour multiplier la valeur actuelle de chaque vecteur de gain w par le résultat du premier moyen d'addition ;
- un deuxième moyen de multiplication adapté pour multiplier le conjugué complexe (y) de ladite sortie de réseau finale y(t) par ledit gain adaptatif µ ;
- un troisième moyen de multiplication adapté pour multiplier chaque élément dudit vecteur de signal x(t) par le résultat du deuxième moyen de multiplication ; et
- une pluralité de moyens d'addition adaptés pour additionner chaque sortie de ladite première pluralité de moyens de multiplication à la sortie correspondante de ladite deuxième pluralité de moyens de multiplication pour obtenir la sortie finale dudit moyen de mise à jour de vecteur de gain à chaque moment instantané sous la forme${\text{w ← (1 - µγ)w + µy}}^{\text{·}} \text{x.}$

3. Appareil de traitement de signal selon la revendication 2, **caractérisé en ce que** le moyen adapté pour mettre à jour ledit vecteur de gain w comprend de plus :
- une pluralité de moyens de multiplication adaptés pour calculer le carré de l'amplitude de chaque sortie de ladite pluralité de moyens d'addition ;
- un moyen d'addition adapté pour additionner toutes les sortes desdits moyens de multiplication ;
- un moyen adapté pour calculer la racine carrée du résultat dudit moyen d'addition ;
et
- une pluralité de moyens de division adaptés pour diviser chaque sortie de ladite pluralité de moyens d'addition par le résultat dudit moyen de calcul de racine carrée pour générer une valeur normalisée pour le vecteur de gain sous la forme w ← w/|w|.

4. Procédé de traitement de signal adapté pour minimiser les interférences et pour réduire les effets de bruit en contrôlant les diagrammes de faisceau d'un système de télécommunications ayant une antenne en réseau, **caractérisé en ce qu'**il comprend les étapes consistant à :
- calculer un paramètre gamma γ(k) en utilisant un gain adaptatif µ, un vecteur de signal x(t) et un signal de sortie de réseau final y(t) à un moment instantané actuel ; et
- mettre à jour un vecteur de gain w en utilisant ledit paramètre gamma γ(k), la valeur actuelle dudit vecteur de gain w, ledit gain adaptatif µ, ledit vecteur de signal x(t) et ladite sortie d'antenne finale y(t),
dans lequel
- γ(k) est un coefficient pour mettre à jour, à chaque moment instantané k, un vecteur directeur de recherche v(k) ;
- µ est un coefficient adaptatif pour mettre à jour le vecteur de gain w utilisé pour former le diagramme de faisceau souhaité d'une antenne en réseau d'un système de télécommunications ;
- y(t) est le signal de sortie de réseau final, calculé en tant que résultat du produit interne du vecteur de signal x(t) et du vecteur de gain w ;
- le vecteur de gain w est mis à jour sur la base du gain adaptatif µ(k) et du vecteur directeur de recherche v(k), où µ(k) et v(k) sont les valeurs du gain adaptatif µ, respectivement, du vecteur directeur de recherche v au k^{ème} moment instantané ;
**caractérisé en outre en ce que** l'étape de calcul dudit paramètre gamma γ(k) comprend les sous-étapes consistant à :
a1) calculer le carré de l'amplitude de ladite sortie de réseau finale y(t) ;
a2) additionner l'inverse (1/µ) dudit gain adaptatif µ au résultat de ladite sous-étape a1 ;
a3) calculer le carré du résultat (A) de ladite sous-étape a2 ;
a4) calculer le carré de l'amplitude de chaque élément dudit vecteur de signal x(t) ;
a5) additionner tous les résultats de ladite sous-étape a4 ;
a6) additionner le résultat de ladite sous-étape a5 à la multiplication de l'inverse dudit gain adaptatif µ par 2, c'est-à-dire à 2/µ ;
a7) multiplier le résultat de ladite sous-étape a6 par le résultat |y|² de ladite sous-étape a1 ;
a8) soustraire le résultat B de ladite sous-étape a7 au résultat A² de ladite sous-étape a3 ;
a9) calculer la racine carrée du résultat de ladite sous-étape a8 ; et
a10) soustraire le résultat de ladite sous-étape a9 au résultat de ladite a2, et par conséquent, la valeur obtenue dudit paramètre gamme γ(k) est obtenue par γ(k) = A - $\sqrt{{\text{A}}^{\text{2}}}$ -B.

5. Appareil de traitement de signal selon la revendication 4, **caractérisé en ce que** l'étape de mise à jour dudit vecteur de gain w comprend les sous-étapes consistant à :
b1) multiplier ledit paramètre gamma γ(k) par ledit gain adaptatif µ ;
b2) soustraire le résultat de ladite sous-étape b1 à 1 ;
b3) multiplier la valeur actuelle de chaque élément dudit vecteur de gain w par le résultat de ladite sous-étape b2 ;
b4) multiplier le conjugué complexe de la valeur actuelle de ladite sortie de réseau finale y(t) par ledit gain adaptatif µ ;
b5) multiplier chaque élément dudit vecteur de signal x(t) au moment instantané actuel par le résultat de ladite sous-étape b4 ; et
b6) additionner chaque résultat de ladite sous-étape b3 à chaque résultat de ladite sous-étape b5, et par conséquent, ledit vecteur de gain w est mis à jour par w ← (1 - µγ)w + µy^{·}x.

6. Appareil de traitement de signal selon la revendication 4, **caractérisé en ce que** l'étape de mise à jour dudit vecteur de gain w comprend les sous-étapes consistant à :
b1) multiplier ledit paramètre gamma γ(k) par ledit gain adaptatif µ ;
b2) soustraire le résultat de ladite sous-étape b1 à 1 ;
b3) multiplier la valeur actuelle de chaque élément dudit vecteur de gain w par le résultat de ladite sous-étape b2 ;
b4) multiplier le conjugué complexe de la valeur actuelle de ladite sortie de réseau finale y(t) par ledit gain adaptatif µ ;
b5) multiplier chaque élément dudit vecteur de signal x(t) au moment instantané actuel par le résultat de ladite sous-étape b4 ;
b6) additionner chaque résultat de ladite sous-étape b3 à chaque résultat de ladite sous-étape b5 ;
b7) calculer le carré de l'amplitude de chaque sortie de ladite sous-étape b6 ;
b8) additionner toutes les sorties desdites valeurs carrées ;
b9) calculer la racine carrée du résultat de ladite sous-étape b2 ; et
b10) diviser chaque sortie de ladite sous-étape b6 par le résultat de la sous-étape b9 pour générer$\text{w ← w/|w|.}$

7. Procédé de traitement de signal selon la revendication 4, **caractérisé en ce que** ledit vecteur de gain w est déterminé par la valeur d'un vecteur propre correspondant à la valeur propre maximale d'une matrice d'autocorrélation R des signaux reçus par chaque élément d'antenne de ladite antenne en réseau, la matrice d'autocorrélation R étant un coefficient représentant les caractéristiques des signaux reçus.

8. Procédé de traitement de signal selon la revendication 7, **caractérisé en ce que** ledit vecteur de gain w est déterminé en multipliant une constante prédéterminée par chaque élément dudit vecteur propre correspondant à ladite valeur propre maximale de ladite matrice d'autocorrélation R, afin de modifier ledit vecteur de gain w sans modifier les caractéristiques de diagramme de faisceau dudit vecteur propre de ladite valeur propre maximale.

9. Procédé de traitement de signal selon la revendication 7, **caractérisé en ce que** ledit vecteur de gain w est déterminé en normalisant ledit vecteur propre correspondant à ladite valeur propre maximale de ladite matrice d'autocorrélation R, de telle manière que l'amplitude du vecteur propre normalisé prenne la valeur 1 et que la caractéristique de diagramme de faisceau dudit vecteur propre de ladite valeur propre maximale reste inchangée.

10. Procédé de traitement de signal selon la revendication 7, **caractérisé en ce que** ladite matrice d'autocorrélation est calculée en additionnant un premier terme et un deuxième terme, comme décrit dans l'équation présentée ci-dessous, le premier terme étant la matrice d'autocorrélation R au dernier moment instantané précédent multipliée par un facteur d'oubli f, et le deuxième terme étant une matrice de signaux calculée avec ledit vecteur de signal x(t) obtenu pour chaque élément d'antenne de ladite antenne en réseau au moment instantané actuel :${\text{R}}_{\text{x}} {\text{(J+1) = f*R}}_{\text{x}} {\text{(J) + x((J+1)T}}_{\text{s}} {\text{)x}}^{\text{H}} {\text{((J+1)T}}_{\text{s}} \text{)}$ où Rₓ(J+1) et Rₓ(J) désignent ladite matrice de corrélation aux J+1^{ème} et J^{ème} moment instantanés, respectivement, f est ledit facteur d'oubli dont la grandeur est comprise entre 0 et 1, Tₛ est une période de moment instantané et l'exposant H désigne un opérateur hermitien.

11. Procédé de traitement de signal selon la revendication 10, **caractérisé en ce que** ledit facteur d'oubli f dans la formation de ladite matrice d'autocorrélation R est ajusté de manière à prendre la valeur 0 pour simplifier la procédure entière.

12. Procédé de traitement de signal selon la revendication 7, **caractérisé en ce que** ledit vecteur propre correspondant à ladite valeur propre maximale est calculé par la procédure consistant à :
- déterminer ledit vecteur de gain w avec une valeur normalisée du vecteur de signal reçu x(0), la phase de chaque élément dudit vecteur de signal x(t) étant modifiée de telle manière que la sortie de réseau obtenue soit synchronisée avec la phase du signal reçu par un élément d'antenne de référence lors du premier moment instantané ; et
- mettre à jour ledit vecteur de gain w du dernier moment instantané précédent de telle manière qu'une fonction de coût prédéterminée, f(w) = w^{H}Rₓw + γ(1-w^{H}w), soit maximisée en satisfaisant à une contrainte |w(k)|² = 1 à chaque moment instantané, et qu'une valeur de gain à multiplier par ledit signal reçu par ledit élément d'antenne de référence à chaque moment instantané soit maintenue comme étant une quantité réelle lors du deuxième moment instantané et ainsi de suite, Rₓ étant une matrice d'autocorrélation.

13. Procédé de traitement de signal selon la revendication 12, **caractérisé en ce que** ledit élément d'antenne de référence est déterminé par un élément d'antenne dont la phase dudit signal est la dernière de tous lesdits éléments d'antenne dans ladite antenne en réseau au moment instantané actuel.

14. Procédé de traitement de signal selon la revendication 12, **caractérisé en ce que** ledit élément d'antenne de référence est déterminé par ledit élément d'antenne dont la distance physique depuis une source de signal avec laquelle communiquer au moment instantané actuel est la plus éloignée par rapport aux autres éléments d'antenne dans ladite antenne en réseau.

15. Appareil de traitement de signal adapté pour minimiser les interférences et réduire les effets de bruit en contrôlant les diagrammes de faisceau d'un système de télécommunications ayant une antenne en réseau, **caractérisé en ce qu'**il comprend :
- un moyen adapté pour générer une matrice d'autocorrélation R de signaux reçus en utilisant un vecteur de signal x(t) dont chaque élément est obtenu à partir des signaux reçus par un élément d'antenne correspondant à chaque moment instantané ;
- un moyen adapté pour calculer un paramètre gamma γ(k), en utilisant un gain adaptatif prédéterminé µ, la valeur actuelle d'un vecteur de gain w et la matrice d'autocorrélation R, à chaque moment instantané ; et
- un moyen adapté pour mettre à jour ledit vecteur de gain w en utilisant ledit paramètre gamma γ(k), la valeur actuelle dudit vecteur de gain w, ledit gain adaptatif µ et la matrice d'autocorrélation R
dans lequel
- la matrice d'autocorrélation R est un coefficient représentant les caractéristiques des signaux reçus à chaque moment instantané ;
- γ(k) est un coefficient pour mettre à jour, à chaque moment instantané k, un vecteur directeur de recherche v(k) ;
- µ est un coefficient adaptatif pour mettre à jour le vecteur de gain w utilisé pour former le diagramme de faisceau souhaité d'une antenne en réseau d'un système de télécommunications ;
- y(t) est le signal de sortie de réseau final, calculé en tant que résultat du produit interne du vecteur de signal x(t) et du vecteur de gain w ;
- le vecteur de gain w est mis à jour sur la base du gain adaptatif µ(k) et du vecteur directeur de recherche v(k), où µ(k) et v(k) sont les valeurs du gain adaptatif µ, respectivement, du vecteur directeur de recherche v au k^{ème} moment instantané ;
**caractérisé en outre en ce que** ledit moyen adapté pour calculer ledit paramètre gamma γ(k) comprend :
- un premier moyen de multiplication adapté pour multiplier chaque ligne de la matrice d'autocorrélation R par la valeur actuelle dudit vecteur directeur de recherche v pour générer un vecteur E, c'est-à-dire, E = R v ;
- un deuxième moyen de multiplication adapté pour multiplier le conjugué complexe de chaque élément du vecteur de gain w par l'élément correspondant de E, c'est-à-dire, λ = w^{H}E ;
- un premier moyen de calcul adapté pour calculer la norme L₂ du vecteur E, c'est-à-dire, F = E^{H} E ;
- un troisième moyen de multiplication adapté pour multiplier deux fois l'inverse du gain adaptatif µ par λ, c'est-à-dire, G = 2 λ/µ ;
- un premier moyen d'addition adapté pour additionner l'inverse du gain adaptatif µ à λ, c'est-à-dire, A = 1/µ + λ ;
- un deuxième moyen de calcul adapté pour calculer le carré de A, c'est-à-dire, C = A² ;
- un deuxième moyen d'addition adapté pour additionner F à G, c'est-à-dire, B = F + G ; et
- un troisième moyen de calcul adapté pour calculer le gamma γ selon γ = A - $\sqrt{\text{C}}$ - B.

16. Appareil de traitement de signal selon la revendication 15, **caractérisé en ce que** lesdits moyens de mise à jour de vecteur de gain w comprennent :
- un premier moyen de multiplication adapté pour multiplier le gain adaptatif µ par ledit paramètre gamme γ(k), c'est-à-dire, ρ₁ = µγ ;
- un moyen de soustraction adapté pour soustraire le résultat dudit premier moyen de multiplication à 1, c'est-à-dire, ρ₂ = 1 - ρ₁ ;
- un moyen adapté pour additionner le résultat dudit moyen de soustraction aux éléments de la diagonale principale d'une matrice µR pour obtenir une matrice Q, c'est-à-dire, Q = ρ₂I + µR, où I désigne la matrice d'identité ; et
- un deuxième moyen de multiplication adapté pour multiplier la matrice Q par la valeur actuelle du vecteur de gain w pour obtenir le vecteur de gain mis à jour par w ← Qw.

17. Appareil de traitement de signal selon la revendication 14, **caractérisé en ce que** ladite partie de mise à jour du vecteur de gain w comprend :
- un premier moyen de multiplication adapté pour multiplier le gain adaptatif µ par ledit paramètre gamma γ(k), c'est-à-dire, ρ₁ = µγ ;
- un moyen de soustraction adapté pour soustraire le résultat dudit premier moyen de multiplication à 1, c'est-à-dire, ρ₂ = 1 - ρ₁ ;
- un moyen adapté pour additionner le résultat dudit moyen de soustraction aux éléments de la diagonale principale d'une matrice µR pour obtenir une matrice Q, c'est-à-dire, Q = ρ₂I + µR, où I désigne la matrice d'identité ; et
- un deuxième moyen de multiplication adapté pour multiplier la matrice Q par la valeur actuelle du vecteur de gain w, c'est-à-dire D = Q w ;
- un moyen adapté pour calculer la norme L₂ du vecteur D, c'est-à-dire, ρ₃ = Σ₁|D₁|² ; et
- un moyen adapté pour diviser le vecteur D par ρ₃ pour obtenir le vecteur de gain mis à jour w, c'est-à-dire w ← D/√ρ₃.

18. Procédé de traitement de signal pour minimiser les interférences et réduire les effets de bruit en contrôlant les diagrammes de faisceau d'un système de télécommunications ayant une antenne en réseau, **caractérisé en ce qu'**il comprend les étapes consistant à :
- générer une matrice d'autocorrélation R de signaux reçus en utilisant un vecteur de signal x(t) dont chaque élément est obtenu à partir des signaux reçus par un élément d'antenne correspondant à chaque moment instantané ;
- calculer un paramètre gamma γ(k), en utilisant un gain adaptatif µ, la valeur actuelle d'un vecteur de gain w et ladite matrice d'autocorrélation R, à chaque moment instantané ; et
- mettre à jour ledit vecteur de gain w en utilisant ledit paramètre gamma γ(k), la valeur actuelle dudit vecteur de gain w, ledit gain adaptatif µ et ladite matrice d'autocorrélation R ;
où
- la matrice d'autocorrélation R est un coefficient représentant les caractéristiques des signaux reçus à chaque moment instantané ;
- γ(k) est un coefficient pour mettre à jour, à chaque moment instantané k, un vecteur directeur de recherche v(k) ;
- µ est un coefficient adaptatif pour mettre à jour le vecteur de gain w utilisé pour former le diagramme de faisceau souhaité d'une antenne en réseau d'un système de télécommunications ;
- y(t) est le signal de sortie de réseau final, calculé en tant que résultat du produit interne du vecteur de signal x(t) et du vecteur de gain w ;
- le vecteur de gain w est mis à jour sur la base du gain adaptatif µ(k) et du vecteur directeur de recherche v(k), où µ(k) et v(k) sont les valeurs du gain adaptatif µ, respectivement, du vecteur directeur de recherche v au k^{ème} moment instantané ;
**caractérisé en outre en ce que** l'étape de calcul dudit paramètre gamma γ(k) comprend les sous-étapes consistant à :
b1) multiplier chaque ligne de la matrice d'autocorrélation R par la valeur actuelle dudit vecteur de signal v pour générer un vecteur E, c'est-à-dire, E = R v ;
b2) multiplier le conjugué complexe de chaque élément du vecteur de gain w par l'élément correspondant de E, c'est-à-dire, λ = w^{H}E ;
b3) calculer la norme L₂ du vecteur E, c'est-à-dire, F = E^{H} E ;
b4) multiplier deux fois l'inverse du gain adaptatif µ par λ, c'est-à-dire, G = 2 λ/µ ;
b5) additionner l'inverse du gain adaptatif µ à λ, c'est-à-dire, A = 1/µ + λ ;
b6) calculer le carré de A, c'est-à-dire, C = A² ;
b7) additionner F à G, c'est-à-dire, B = F + G ; et
b8) calculer le gamma γ selon γ = A - $\sqrt{\text{C}}$ - B.

19. Procédé de traitement de signal selon la revendication 18, **caractérisé en ce que** l'étape de mise à jour dudit vecteur de gain w comprend les sous-étapes consistant à :
c1) multiplier le gain adaptatif µ par ledit paramètre gamme γ(k), c'est-à-dire, ρ₁ = µγ ;
c2) soustraire le résultat de ladite sous-étape c1 à 1, c'est-à-dire, ρ₂ = 1 - ρ₁ ;
c3) additionner le résultat de ladite sous-étape c2 aux éléments de la diagonale principale d'une matrice µR pour obtenir une matrice Q, c'est-à-dire, Q = ρ₂I + µR, où I désigne la matrice d'identité ; et
c4) multiplier la matrice Q par la valeur actuelle du vecteur de gain w pour obtenir le vecteur de gain mis à jour par w ← Qw.

20. Procédé de traitement de signal selon la revendication 18, **caractérisé en ce que** ladite étape de mise à jour du vecteur de gain w comprend les sous-étapes consistant à :
c1) multiplier le gain adaptatif µ par ledit paramètre gamma γ(k), c'est-à-dire, ρ₁ = µγ ;
c2) soustraire le résultat de ladite sous-étape c1 à 1, c'est-à-dire, ρ₂ = 1 - ρ₁ ;
c3) additionner le résultat de ladite sous-étape c2 aux éléments de la diagonale principale d'une matrice µR pour obtenir la matrice Q résultante, c'est-à-dire, Q = ρ₂I + µR, où I désigne la matrice d'identité ;
c4) multiplier la matrice Q par la valeur actuelle du vecteur de gain w, c'est-à-dire D = Q w ;
c5) calculer la norme L₂ du vecteur D, c'est-à-dire, ρ₃ = Σ₁|D₁|² ; et
c6) diviser le vecteur D par ρ₃ pour obtenir le vecteur de gain mis à jour w, c'est-à-dire w ← D/√ρ₃.

21. Procédé de traitement de signal selon la revendication 18, **caractérisé en ce que** ledit vecteur de gain w est déterminé par la valeur d'un vecteur propre correspondant à la valeur propre maximale d'une matrice d'autocorrélation R des signaux reçus par chaque élément d'antenne de ladite antenne en réseau.

22. Procédé de traitement de signal selon la revendication 21, **caractérisé en ce que** ledit vecteur de gain w est déterminé en multipliant une constante prédéterminée par chaque élément dudit vecteur propre correspondant à ladite valeur propre maximale de ladite matrice d'autocorrélation R, afin de modifier ledit vecteur de gain w sans modifier les caractéristiques de diagramme de faisceau dudit vecteur propre de ladite valeur propre maximale.

23. Procédé de traitement de signal selon la revendication 21, **caractérisé en ce que** ledit vecteur de gain w est déterminé en normalisant ledit vecteur propre correspondant à ladite valeur propre maximale de ladite matrice d'autocorrélation R, de telle manière que l'amplitude du vecteur propre normalisé prenne la valeur 1 et que les caractéristiques de diagramme de faisceau dudit vecteur propre de ladite valeur propre maximale restent inchangées.

24. Procédé de traitement de signal selon la revendication 21, **caractérisé en ce qu'**une partie de calcul de matrice d'autocorrélation (20) calcule la matrice d'autocorrélation R en additionnant un premier terme et un deuxième terme, comme décrit dans l'équation présentée ci-dessous, le premier terme étant la matrice d'autocorrélation R au dernier moment instantané précédent multipliée par un facteur d'oubli f, et le deuxième terme étant une matrice de signaux calculée avec ledit vecteur de signal x(t) obtenu pour chaque élément d'antenne de ladite antenne en réseau au moment instantané actuel :${\text{R}}_{\text{x}} {\text{(J+1) = f*R}}_{\text{x}} {\text{(J) + x((J+1)T}}_{\text{s}} {\text{)x}}^{\text{H}} {\text{((J+1)T}}_{\text{s}} \text{)}$ où Rₓ(J+1) et Rₓ(J) désignent ladite matrice de corrélation aux J+1^{ème} et J^{ème} moment instantanés, respectivement, f est ledit facteur d'oubli dont la grandeur est comprise entre 0 et 1, Tₛ est une période de moment instantané et l'exposant H désigne un opérateur hermitien.

25. Procédé de traitement de signal selon la revendication 21, **caractérisé en ce que** ledit vecteur propre correspondant à ladite valeur propre maximale est calculé par la procédure consistant à :
- déterminer ledit vecteur de gain w avec une valeur normalisée du vecteur de signal reçu x(0), la phase de chaque élément dudit vecteur de signal x(t) étant modifiée de telle manière que la sortie de réseau obtenue soit synchronisée avec la phase du signal reçu par ledit élément d'antenne de référence lors du premier moment instantané ; et
- mettre à jour ledit vecteur de gain w du dernier moment instantané précédent de telle manière qu'une fonction de coût prédéterminée, f(w) = w^{H}Rₓw + γ(1-w^{H}w), soit maximisée en satisfaisant à une contrainte
|w(k)|² = 1 à chaque moment instantané, et qu'une valeur de gain à multiplier par ledit signal reçu par ledit élément d'antenne de référence à chaque moment instantané soit maintenue comme étant une quantité réelle lors du deuxième moment instantané et ainsi de suite, Rₓ étant une matrice d'autocorrélation.

26. Procédé de traitement de signal selon la revendication 25, **caractérisé en ce que** ledit élément d'antenne de référence est déterminé par un élément d'antenne dont la phase dudit signal est la dernière de tous lesdits éléments d'antenne dans ladite antenne en réseau au moment instantané actuel.

27. Procédé de traitement de signal selon la revendication 25, **caractérisé en ce que** ledit élément d'antenne de référence est déterminé par ledit élément. d'antenne dont la distance physique depuis une source de signal avec laquelle communiquer au moment instantané actuel est la plus éloignée par rapport aux autres éléments d'antenne dans ladite antenne en réseau.
